# EUROPÄISCHE PATENTSCHRIFT

(11) **EP 2 947 532 B1**
(45) Veröffentlichungstag und Bekanntmachung des Hinweises auf die Patenterteilung: **29.07.2020**
(21) Anmeldenummer: 15163753.5
(22) Anmeldetag: 11.02.2011
(51) Int. Cl.: G05D 1/00, B62D 59/04

(54) **RANGIERSYSTEM MIT EINER FERNBEDIENUNG UND EINER RANGIERVORRICHTUNG FÜR EINEN ANHÄNGER**
MOVER SYSTEM WITH A REMOTE CONTROLLER AND A MOVER DEVICE FOR A TRAILER
SYSTÈME DE MANOEUVRE DOTÉ D'UNE TÉLÉCOMMANDE ET D'UN DISPOSITIF DE MANOEUVRE POUR UNE REMORQUE

(30) Priorität: 12.02.2010 DE 202010000176 U
(43) Veröffentlichungstag der Anmeldung: 25.11.2015
(62) Teilanmeldung aus: 11154186.8
(73) Patentinhaber: Alois Kober GmbH, 89359 Kötz (DE)
(72) Erfinder:
(74) Vertreter: Ernicke, Klaus Stefan

(56) Entgegenhaltungen:
- EP-A1- 1 886 905
- EP-A2- 1 826 107
- WO-A1-2006/062416
- DE-A1- 19 736 086
- DE-U1-202009 005 524
- FR-A1- 2 776 551
- US-A- 4 763 100
- US-A1- 2006 206 244

## Beschreibung

Die Erfindung betrifft ein Rangiersystem mit den Merkmalen im Oberbegriff des Hauptanspruchs. Die Offenbarung betrifft weiterhin eine Fernbedienung, ein aktives Steuerelement und eine Rangiervorrichtung.

In der Praxis sind Fernbedienungen für Rangiervorrichtungen an Fahrzeugen, insbesondere an Caravans und Anhängern bekannt. Die Rangiervorrichtungen haben meist zwei oder vier motorische Antriebe, die seitlich mit Reibwalzen an die Räder eines Fahrzeugs anpressbar sind. Durch eine angetriebene Drehung der Reibwalzen wird eine Drehung der Räder des Fahrzeugs ausgelöst, was zu einer entsprechenden Bewegung des Fahrzeugs führt. Die Steuerbefehle für die Rangiervorrichtung können durch eine Bedienperson an einer Fernbedienung eingegeben werden. Das ferngesteuerte Rangieren von Fahrzeugen stellt dabei eine komplexe Geistesleistung für den Bediener dar.

EP1886905 A1 offenbart eine Rangiervorrichtung für Anhänger mit einem Hilfsantrieb und einer Fernbedienung. Die Fernbedienung unterstützt eine manuelle Steuerung per Tastendruck und eine nachfolgende automatische Steuerung. Die Rangiervorrichtung weist eine Positionserfassungsvorrichtung zum Erfassen einer Ist-Relativposition des Anhängers und der Fernbedienung auf. Eine Steuereinrichtung ist durch ein Aktivierungs-Schaltelement aktivierbar. Die aktivierte Steuereinrichtung steuert den Hilfs-Fahrantrieb derart, dass der Anhänger so bewegt wird, dass eine Abweichung zwischen der erfassten Ist-Relativposition und der Soll-Relativposition verringert wird. Bei der Bewegung der Fernbedienung als Ganzes relativ zum Anhänger, folgt der Anhänger automatisch der Bewegung der Fernbedienung nach, als wenn zwischen der Fernbedienung und dem Anhänger eine virtuelle Linie gespannt wäre. Lenkbewegungen werden auf den Anhänger übertragen, indem die Fernbedienung geeignet bewegt wird. Bei einem Nicht-Betätigen des Aktivierungs-Schaltelements kann der Bediener weitere an der Fernbedienung vorgesehene Schaltelemente betätigen, um den Hilfs-Fahrantrieb manuell anzusteuern und auf diese Weise den Anhänger ohne Unterstützung der Steuereinrichtung frei zu bewegen. In diesem Fall ist die Bewegung des Anhängers nicht an die Bewegung der Fernbedienung gekoppelt.

Aus US 2006/0206244 A1 ist ein Fernsteuerungssystem für Schiffe mit Strahlantrieben bekannt. Die Strahlantriebe sind derart steuerbar, dass das Schiff - unabhängig von seiner aktuellen Orientierung - in eine beliebige horizontale Richtung bewegbar ist, also beispielsweise gegenüber der Bug-Heckrichtung zur Seite hin. An einer Fernbedienung ist ein Joystick angeordnet. Das Kippen des Joysticks aus der Vertikalrichtung in eine bestimmte horizontale Richtung gibt die gewünschte Bewegung des Schiffs vor.

DE 20 2009 005 524 U1 und EP 1 826 107 A2 offenbaren weiteren Rangiersysteme mit Fernbedienungen, an denen ein Joystick vorgesehen ist.

Weitere Fernbedienungen sind aus der FR 2776551 A, der DE 197 36 086 A1 und der US 4, 763, 100 B hervor.

Aus dem Modellbaubereich sind weiterhin sog. "Pistolengriff"-Fernsteuerungen bekannt, die bevorzugt für fernsteuerbare Spielzeugautos benutzt werden. Solche Spielzeugautos sind Nachbildungen von PKW mit zwei lenkbaren Vorderrädern und starren Hinterrädern. Die Vorderräder können durch einen Stellmotor gelenkt werden und sind üblicher Weise nicht angetrieben. Die Hinterräder sind starr, also nicht lenkbar und meist dauerhaft mit einem Fahrmotor in Form eines Elektromotors verbunden.

An der Fernsteuerung ist ein Haltegriff in Form eines Pistolengriffs angeordnet, der meist zum bequemen Halten der Fernbedienung in der linken Hand ausgebildet ist. Oberhalb des Haltegriffes ist ein Gehäuse vorgesehen, in dem sich ein Sendemodul befindet und an dem zur Steuerung der Bewegungen des Spielzeugautos zwei Bedienelemente angeordnet sind, nämlich ein Drehrad (oder Lenkrad) und ein daneben befindlicher Eingabehebel, der auch als Gashebel bezeichnet wird. Der Gashebel hat die Form eines Pistolenabzugs mit einer endseitigen Öse, durch die der Zeigefinger der linken Hand gesteckt werden kann. Er ist schwenkbar im Gehäuse gelagert. Das Drehrad wird mit der rechten Hand bedient, während der Gashebel unabhängig davon mit der linken Hand bedient wird.

Die Bedienelemente sollen von der Logik her die Eingabemöglichkeiten von Lenkrad und Gaspedal eines PKW nachbilden. D.h. durch eine Rotation des Drehrads wird ein Signal vorgegeben, das direkt in eine Betätigung des Stellmotors für die Lenkung umgesetzt wird. Durch ein Schwenken des Eingabehebels wird eine von der Lenkung unabhängige Vorgabe für die gewünschte Antriebsgeschwindigkeit des Fahrmotors am Spielzeugauto gemacht. Die gewünschte zweidimensionale Bewegung des Spielzeugautos wird an der Fernbedienung durch zwei jeweils eindimensionale und getrennte Bedieneingaben für den Lenkmotor und den Antriebsmotor erzeugt.

Aus der US 2004/0032395 A1 ist ein Bedienknopf für die Steuerung von Menüs von computerbasierten Anwendungen bekannt. Der Bedienknopf kann gedreht werden, um beispielsweise in einer Listenauswahl zu scrollen. Er kann weiterhin zur Auslösung eines jeweiligen Schaltkontakts in bis zu acht Richtungen gekippt sowie in Richtung der Drehachse eingedrückt werden. In diesen Kipprichtungen sowie beim Eindrücken wirkt der Bedienknopf wie ein Drucktaster, er hat also bezüglich jeder diese Bewegungsmöglichkeiten eine AN- und eine AUS-Position ohne Zwischenstellungen. Ein entsprechender Bedienknopf ist beispielsweise in der Mittelkonsole von Luxus-PKW als Eingabeelement der Benutzerschnittstellen für die komplexen Bordcomputerfunktionen bekannt. Eine Steuerung von Fahrzeugbewegungen ist mit einem solchen Bedienknopf nicht vorgesehen, noch handelt es sich hier um eine Fernsteuerung.

Die EP 1679251 A2 lehrt eine Rangiervorrichtung für Anhänger mit zwei Hilfsantrieben und einer Fernsteuerung. An der Fernsteuerung sind mehrere Knöpfe vorgesehen. Ein Knopf ist für die Vorwärtsfahrt gedacht und bewirkt eine gleichsinnige Drehbewegung der Hilfsantriebe mit gleicher Geschwindigkeit, was zu einer Geradeausfahrt des Anhängers führt. Ein anderer Knopf ist für eine enge Linksdrehung vorgesehen, bei der der rechtsseitige Antrieb in Vorwärtsrichtung mit hoher Geschwindigkeit und der linksseitige Antrieb in Vorwärtsrichtung mit geringerer Geschwindigkeit angetrieben wird, wobei das Geschwindigkeitsverhältnis fest vorgegeben und nicht vom Bediener beeinflussbar ist. Wieder ein anderer Knopf kann für eine weitläufige Linksdrehung vorgesehen sein, wobei ein entsprechend anderes festes Verhältnis der Antriebsgeschwindigkeiten für die Hilfsfahrantriebe erzeugt wird. Entsprechende weitere Knöpfe können für eine Rückwärtsfahrt, eine enge Rechtskurve und eine enge Linkskurve vorgesehen sein. Bei dieser Fernbedienung bewirkt jeweils ein zur Fernbedienung hin, also je nach der Position, in der die Fernbedienung gehalten wird, meist nach unten gerichtetes Eindrücken eines Knopfes entweder eine reine Translation des Anhängers in der Ebene nach vorn oder hinten, oder eine ebene Bewegung auf einer in der Krümmung fest vorgegebenen Kurvenbahn. Andere als die fest vorgegebenen Geschwindigkeitsverhältnisse und die damit verbundenen Kurvenradien sind nicht erzeugbar.

Es ist Aufgabe der Erfindung, die Bedienungsmöglichkeiten zum Rangieren von Fahrzeugen zu verbessern.

Die Erfindung löst diese Aufgabe mit den Merkmalen im Kennzeichenteil des eigenständigen Anspruchs.

Die offenbarte Fernbedienung weist ein Eingabegerät mit einem Griffteil auf. Das Eingabegerät ist derart gestaltet, dass die Freiheitsgrade der Beweglichkeit des zu steuernden Fahrzeugs, insbesondere eines abgekuppelten Anhängers, in den Freiheitsgraden der Beweglichkeit des Eingabegerätes abgebildet sind. Das bedeutet, dass das Eingabegerät mindestens zweidimensional beweglich ist. Es sieht eine Rotation eines Griffteils um seine Hochachse in Bezug auf eine Grundposition vor, gegenüber der es auslenkbar ist. Das Eingabegerät kann weiterhin eine Translation oder Kippung des Griffteils in Bezug auf die Grundposition vorsehen. Die Rotation des Griffteils kann nach Richtung und Betrag einstellbar sein, wobei mit der Rotation des Griffteils ein Rotationsanteil der Fahrbewegung des Fahrzeugs beeinflussbar ist. Ebenso kann eine Translation oder Kippung des Griffteils nach Richtung und Betrag einstellbar sein, wobei mit der Translation ein Translationsanteil der Fahrbewegung des Fahrzeugs einstellbar ist.

Hierdurch wird vorteilhafter Weise erreicht, dass eine Bedienperson fühlt und intuitiv versteht, welche Bedieneingaben an der Fernbedienung zu welchen Bewegungen am Fahrzeug führen werden. Die Fernbedienung wirkt dabei auf die Antriebseinheiten der Rangiervorrichtung und steuert deren Energiezufuhr bzw. Richtung und Geschwindigkeit. Hierdurch wird das Fahrzeug vorwärts und rückwärts manövriert. Kurvenfahrten und Drehungen des Fahrzeugs werden durch Geschwindigkeitsunterschiede der linken und rechten Antriebe bzw. Räder bewirkt. Anders als bisherige Bedienungen mit Tasten, Joystick oder dgl. informiert die beanspruchte Fernbedienung mit der Rotation den Bediener nicht über die Betätigungsmöglichkeiten der Antriebe, sondern über die resultierende Fahr- und Lenkfunktion des Fahrzeugs und setzt intern die eingegebenen Lenkbefehle in eine entsprechende Antriebssteuerung um. Die Rotation an der Fernbedienung suggeriert ein Lenken des Fahrzeugs, obwohl dessen Räder üblicherweise nicht lenkbar sind.

Eine Fernsteuerung weist bevorzugt eine Datenübertragungseinrichtung zur Ansteuerung mehrerer Hilfsfahrantriebe des Fahrzeugs auf. Über die Datenübertragungseinrichtungen können am Griffteil eingegebene Befehle einer Bedienperson zum Fahrzeug und den dort angeordneten Hilfsfahrantrieben übertragen werden.

Ein Fahrzeug kann insbesondere ein ein- oder mehrachsiger, insbesondere zweiachsiger Zuganhänger mit starrer oder schwenkbarer Deichsel sein, der zwei relevante Freiheitsgrade der Beweglichkeit aufweist, nämlich eine Translation auf der Längsachse und eine Rotation um die Hochachse des Anhängers. Bei anderen Fahrzeugen können die Freiheitsgrade entsprechend anders sein.

Bei einer Fernsteuerung für einen ein- oder mehrachsigen Anhänger führt eine Eingabebewegung als Verschiebung des Griffteils auf dessen Längsachse entsprechend zu einer Fahrbewegung des Fahrzeugs auf dessen Längsachse. Eine erwünschte Translation des Fahrzeugs kann also auch als Translation des Griffteils an der Fernbedienung eingegeben werden. Eine Drehung des Griffteils um seine Hochachse führt entsprechend zu einer Drehung des Fahrzeugs um dessen Hochachse. Eine erwünschte Rotation des Fahrzeugs wird also auch über eine Rotation des Griffteils an der Fernbedienung eingegeben.

Auch eine kurvenartige Bewegung des Griffteils, die im Wesentlichen aus einer überlagerten Verschiebung und einer Drehung des Griffteils zusammengesetzt sein kann, führt zu einer entsprechenden Kurvenbewegung des Fahrzeugs. Die im Wesentlichen zweidimensionalen Teilbewegungen eines Rangiervorgangs können durch entsprechende zweidimensionale Steuerbewegungen an der Fernbedienung vorgegeben werden. Das ferngesteuerte Rangieren von Fahrzeugen kann hierdurch für die Bedienperson erheblich vereinfacht werden. Es ist insbesondere für die Bedienperson nicht erforderlich, eine Kurvenbewegung durch die separate Eingabe von jeweils eindimensionaler Translation und eindimensionaler Drehung zu steuern.

Die äußere Form des Griffteils kann z.B. in Nachbildung oder Symbolisierung des zu steuernden Fahrzeugs, als Lenkrad oder dgl. ausgeführt sein. Wird mit der Fernbedienung ein Anhänger oder Caravan gesteuert, so kann das Griffteil beispielsweise die Form eines Miniaturmodels eines Anhängers mit Deichsel und/oder Anhängerkupplung aufweisen. Auf diese Weise repräsentiert die Form des Griffteils das zu steuernde Fahrzeug, wodurch für die Bedienperson auf den ersten Blick verständlich ist, in welcher Art und in welcher Richtung sich Eingabebefehle für das Rangieren am Fahrzeug auswirken werden. Das Verständnis der Eingabelogik kann somit für die Bedienperson vereinfacht werden.

Die Fernbedienung kann eine Positioniersteuerung für Fahrzeugteile, insbesondere eine Ankuppelsteuerung aufweisen. Bspw. kann das vorerwähnte Griffteil einen speziellen und z.B. angeformten Angriffspunkt aufweisen, der symbolhaft oder in Nachbildung das Deichselende eines Fahrzeugs repräsentiert. Der Angriffspunkt kann zur Steuerung des Fahrzeugs beim An- oder Abkuppeln genutzt werden.

Eine Bedienperson muss beim Ankuppeln eines Anhängers an eine Anhängekupplung des Zugfahrzeugs den Anhänger und insbesondere dessen Deichsel in eine ankuppelfähige Position zur Anhängekupplung bringen. Es kann bspw. sein, dass eine Kupplungspfanne am Ende einer Deichsel des Anhängers direkt über einen Kugelkopf an der Kupplungsvorrichtung eines PKW gebracht werden muss, um ein Ankuppeln auszuführen zu können. Die hierzu benötigte Verfahrbewegung des Anhängers ist mit bisherigen Fernbedienungen mit Tasten- oder Joystick-Steuerung nicht durchführbar, da diese eine nur ungenaue Steuerung ermöglichen.

Beim Steuern des Anhängers in eine Kuppelposition steht für eine Bedienperson die Bewegung der Kupplungspfanne im Vordergrund, während die Gesamtbewegung des Anhängers von nachrangiger Bedeutung ist. Durch die Ankuppelsteuerung kann eine Bewegung der Kupplungspfanne von einer Bedienperson direkt als solche vorgegeben werden. Bspw. kann die Bedienperson mit dem an der Fernbedienung angeordneten Angriffspunkt direkt Steuervorgaben für eine Soll-Bewegung der Kupplungspfanne vorgeben, die intern in eine geeignete Bewegung der Antriebe und somit der Räder des Fahrzeugs umgesetzt werden, sodass die Kupplungspfanne mitsamt dem Anhänger tatsächlich entsprechend der Vorgabe geführt wird.

An dem Angriffspunkt kann ein weiteres Bedienelement zur Ansteuerung von Zusatzfunktionen, wie bspw. dem Betätigen einer Hebe-/ Senkeinrichtung vorgesehen sein, mit der ein Anheben oder Absenken der Anhängerdeichsel und/oder der Kupplungspfanne möglich ist. Ein solches Bedienelement kann auch separat und an anderer Stelle angeordnet sein. Schließlich kann das Eingabegerät, an dessen Griffteil sich ein Angriffspunkt befindet, eine zusätzliche, beispielsweise dritte Achse aufweisen, mittels der ein Anheben oder Absenken der Anhängerdeichsel steuerbar ist.

Auf die genannte Weise wird mit der Fernbedienung eine Positioniereinrichtung für ein bestimmtes Fahrzeugteil geschaffen. In gleicher Weise können bei anderen Fahrzeugen auch andere relevante Fahrgestell- oder Aufbauteile, z.B. Zapfstellen an Seiten- oder Heckbereich für Strom oder Wasser, Auslassöffnungen, Treppenaufbauten, Hubbühnen etc. positioniert werden. Das Eingabegerät und/oder die Fernsteuerung können für eine Positionssteuerung solcher Fahrzeugteile entsprechend angepasst sein.

Die Fernbedienung ist bevorzugt derart ausgebildet, dass die Grundposition eines Griffteils drehbar veränderlich ist, wobei insbesondere bei einer Veränderung der Orientierung des Fahrzeugs die Grundposition des Griffteils nachführbar ist.

Das Eingabegerät weist bevorzugt ein Basisteil auf, mit welchem es im Gehäuse der Fernbedienung drehbar gelagert ist. Über die momentane Drehposition des Basisteils ist auch die Grundposition des Griffteils vorgegeben, also die Position, welche das Griffteil einnimmt, wenn keine manuelle Auslenkung des Griffteils erfolgt. Bei einer Drehung des Basisteils wird auch die Grundposition des Griffteils in gleicher Weise drehend verändert.

Die Fernbedienung kann einen Stellmechanismus zur Rotation des Eingabegeräts aufweisen. Der Stellmechanismus kann bevorzugt am Basisteil angreifen und eine gesteuerte Drehung desselben bewirken. Hierdurch wird erreicht, dass die Grundposition des Griffteils in ihrer absoluten räumlichen Orientierung um die Hochachse an die absolute räumliche Orientierung des Fahrzeugs angeglichen werden kann.

Steht eine Bedienperson beispielsweise schräg vor einem zu steuernden Anhänger, wobei die Fahrzeugdeichsel zum Bediener hinweist, so kann die Grundposition des Griffteils derart ausgerichtet werden, dass auch die nachgebildete Deichsel am Griffteil der Fernbedienung zum Bediener hinweist. Vor der Eingabe von Rangierbefehlen kann also die räumliche Orientierung des Griffteils an die räumliche Orientierung des zu steuernden Fahrzeugs angeglichen werden. Dies kann manuell durch die Bedienperson oder auch automatisch erfolgen. Fernbedienung und Rangiervorrichtung können hierzu geeignet ausgebildet sein.

Durch die Angleichung der Orientierungen wird erreicht, dass sich auch im absoluten Koordinatensystem eine Bewegung des Griffteils zur Eingabe eines Steuerbefehls in einer dazu räumlich kongruenten Bewegung des zu steuernden Fahrzeugs niederschlägt. Auf diese Weise wird für die Bedienperson eine gedankliche Transformation zwischen den geometrischen Bezügen des Eingabegerätes und den geometrischen Bezügen der Befehlsumsetzung am Fahrzeug erheblich erleichtert oder sogar überflüssig. Die Eingabe von Bedieninformationen für das ferngesteuerte Rangieren wird intuitiver und Fehler in der Bedieneingabe durch ein Verwechseln der Richtungsbezüge können vermindert oder sogar vermieden werden. Somit kann sich eine Bedienperson stärker mit dem Auffinden eines guten Rangierweges beschäftigen, während die geistige Berücksichtigung der Bedienlogik in Wesentlichen unbewusst und intuitiv erfolgen kann. Das Rangieren kann hierdurch einfacher und weniger unfallträchtig erfolgen. Die Akzeptanz von Rangiervorrichtungen wird erhöht, auch bei ungeübten Fahrzeugnutzern.

Die offenbarte Fernbedienung ist bevorzugt dazu ausgebildet, bei einer Veränderung der Orientierung des Fahrzeugs die Orientierung des Basisteils und somit die Grundposition des Griffteils auch während des Rangiervorganges nachzuführen. Dies kann beispielsweise über eine automatische Ansteuerung des vorgenannten Stellmechanismus geschehen, über den die Grundposition des Griffteils rotierbar ist. Auf diese Weise wird erreicht, dass auch bei einem in mehreren Schritten erfolgenden Rangiervorgang die Grundposition des Griffteils stets in seiner Orientierung um die Hochachse der Orientierung des Fahrzeugs um dessen Hochachse entspricht.

Steht eine Bedienperson beispielsweise seitlich neben einem zu steuernden Fahrzeug und bewegt das Griffteil an der Fernbedienung von sich aus gesehen nach links und in eine Rechtskurve, so bewegt sich durch diesen Steuerbefehl auch das vor ihm befindliche Fahrzeug aus seiner Sicht nach links und in eine Rechtskurve. Während dieser Kurvenbewegung dreht sich das Fahrzeug um seine Hochachse und verändert somit seine Orientierung. Diese Drehung kann kongruent durch eine Drehung des Basisteils an der Fernbedienung und eine damit verbundene Änderung der Grundposition des Griffteils nachgeführt werden.

Durch die Nachführung ist am Ende der Kurvenfahrt die absolute räumliche Orientierung des Griffteils wiederum kongruent zur absoluten räumlichen Orientierung des Fahrzeugs. Auf diese Weise ist für die Bedienperson stets eine leichte Verständlichkeit der räumlichen Bezüge gewährleistet. Sonst übliche Eingabefehler, wie beispielsweise eine versehentliche Verwechslung von Vorwärts- und Rückwärtsrichtung oder das Verwechseln einer Linksdrehung mit einer Rechtsdrehung, können nicht nur zu Beginn, sondern auch während der Ausführung von längeren und komplizierten Rangiervorgängen vermindert oder gänzlich vermieden werden. Die Unfallgefahr des ferngesteuerten Rangierens durch Eingabefehler kann reduziert werden.

Das Eingabegerät kann bevorzugt mindestens ein aktives Steuerelement aufweisen, welches mindestens eine am Griffteil wahrnehmbare und veränderliche Rückstellkraft erzeugt. Die Veränderung einer Rückstellkraft kann für jede mögliche Auslenkung eines Griffteils in jeder Richtung beeinflussbar sein, sodass Kraftverläufe vorgebbar sind.

Das Eingabegerät der Fernbedienung kann beliebig ausgeführt sein. Es kann beispielsweise eine Mechanik mit einem Steuerelementträger und einem Adapterelement aufweisen. Der Steuerelementträger kann mehrere rotatorische und/oder translatorische Steuerelemente aufweisen, die bevorzugt als aktive Steuerelemente ausgebildet sind.

Ein aktives Steuerelement kann beispielsweise ein in einer, zwei oder mehreren Richtungen auslenkbares Stellteil und mindestens ein Rückstellelement aufweisen, wobei das Rückstellelement bevorzugt dazu ausgebildet ist, eine veränderliche Rückstellkraft und/oder ein veränderliches Rückstellmoment auf das Stellteil auszuwirken. Eine Veränderung der Rückstellkraft kann in unterschiedlicher Weise erfolgen. Insbesondere kann an einem aktiven Steuerelement eine Beeinflussung eines Kraftverlaufs für die Rückstellkräfte über der Auslenkung erfolgen. Über die Einstellung des Kraftverlaufs kann für jeden möglichen Wert der Auslenkung des Stellteils eine vorgegebene Rückstellkraft erzeugt werden. Der Kraftverlauf kann hierbei in Abhängigkeit von äußeren Stellsignalen veränderlich sein. Die Rückstellkräfte können für die Richtung einer zunehmenden Auslenkung ggf. anders vorgegeben werden als für die gegensinnige Richtung.

Das Stellteil des aktiven Steuerelements kann je nach Ausführungsform entgegen der Rückstellkraft translatorisch und/oder entgegen dem Rückstellmoment rotatorisch ausgelenkt werden. Durch das Maß der manuell erzeugten Auslenkung kann ein Stellsignal oder Steuersignal erzeugt werden, das ggf. zur Ansteuerung der Rangiervorrichtung dient. Ein Stellsignal kann bevorzugt einen Wert in einem kontinuierlichen Spektrum von möglichen Werten annehmen, also beispielsweise einen Wert in einem kontinuierlichen Spektrum von Null bis Eins oder von Null bis zu einem Maximalwert. Alternativ kann ein Stellsignal auch einen Wert in einem diskreten, also in mögliche Grundwerte gegliederten Spektrum von möglichen Werten annehmen, also beispielsweise einen Wert aus der Menge (0; 0,1; 0,2 ... 0,9; 1,0). Natürlich sind auch entsprechend andere diskrete Unterteilungen eines Spektrums möglich.

Das Griffteil des Eingabegeräts ist bevorzugt über eine Mechanik mit den Stellteilen der aktiven Steuerelemente verbunden. Eine Auslenkung des Griffteils aus seiner Grundposition führt zu einer Auslenkung der Stellteile an den Steuerelementen. Die Rückstellkräfte und/oder Rückstellmomente an den Stellteilen können dabei über die Mechanik auf das Griffteil übertragen werden und sind dort für eine Bedienperson wahrnehmbar, insbesondere spürbar. Für eine Auslenkung des Griffteils aus der Grundposition kann eine Bedienperson die jeweiligen Rückstellkräfte und/oder Rückstellmomente überwinden. Bei einem Loslassen des Griffteils kann dieses über die Rückstellkräfte in seine Grundposition zurückversetzt werden, wobei die Auslenkungen der Stellteile bevorzugt auf null zurückgehen.

Im Folgenden wird aus Gründen der einfacheren Darstellung der Begriff Rückstellkraft in einer Mehrfachbedeutung verwendet. Der Begriff umfasst sinngemäß die Bedeutung einer Rückstellkraft als solcher, als auch die Bedeutung eines Rückstellmoments, sowie eine Kombination von Rückstellkraft und Rückstellmoment. Auch der Begriff Auslenkung kann eine rotatorische, eine translatorische Auslenkung sowie eine Kombination von rotatorischer und translatorischer Auslenkung bedeuten. Soweit eine Differenzierung für das Verständnis der Offenbarung notwendig ist, wird diese explizit vorgenommen.

Durch eine Veränderung der Rückstellkraft an den aktiven Steuerelementen kann erreicht werden, dass sich eine manuelle Bewegung des Griffteils für die Bedienperson in definierter Weise eher leichtgängig oder eher schwergängig anfühlt. Die Bedienperson kann aufgrund der Rückstellkräfte einen von der Auslenkung des Griffteils abhängigen Widerstand erfühlen. Dieser Widerstand kann in seiner Ausprägung veränderlich sein, wobei auch eine Veränderung des Widerstandes für eine Bedienperson spürbar sein kann. Durch geeignete Veränderung der Rückstellkräfte kann mittels der aktiven Steuerelemente eine haptische Rückmeldung an die Bedienperson erfolgen. Die Fernbedienung kann Fahrzeugreaktionen oder Fahrzustände oder Fahrbedingungen an den Bediener rückmelden. Der Informationsgehalt der Rückmeldung kann unterschiedlich sein.

Ein aktives Steuerelement kann für eine, zwei oder mehrere Auslenkungsrichtungen jeweils mehrere separate oder kombinierte Rückstellelemente aufweisen. Durch eine gesteuerte Beeinflussung der Rückstellelemente können diese in Abhängigkeit von der Auslenkung des Stellteils einzeln oder gemeinsam am Stellteil angreifen und eine oder mehrere veränderliche und sich ggf. überlagernde Rückstellkräfte auf das Stellteil auswirken. Auf diese Weise ist es möglich, an einem aktiven Steuerelement definierte und ggf. auch unstetige Kraftverläufe für die Rückstellkraft zu erzeugen.

Die Kraftverläufe können in mehrfacher Weise beeinflussbar und veränderlich sein. Beispielsweise können sie mit einer proportionalen Anhebung oder Absenkung der Rückstellkräfte und einem entsprechenden proportionalen Anstieg oder Absinken des gefühlten Widerstandes erzeugt werden. Sie können alternativ oder zusätzlich mit einer Kraftüberhöhung und/oder mit einem Druckpunkt und/oder mit einem Rastpunkt erzeugt werden.

Eine Kraftüberhöhung kann sich beispielsweise so darstellen, dass eine Bedienperson bei der Bewegung des Griffteils ab einer bestimmten Auslenkung eine merklich stärker ansteigende Rückstellkraft für eine weitere Auslenkung überwinden muss. Die Bedienperson fühlt dies als mechanischen Widerstand und/oder als Gegenkraft. Der gefühlte Widerstand und/oder die Gegenkraft können zur Vermittlung von Informationen und insbesondere als Rückmeldekanal an eine Bedienperson verwendet werden.

Ein Druckpunkt kann beispielsweise in einem sprunghaften und unstetigen Anstieg des zu überwindenden Widerstandes bei einer vorgegebenen Auslenkung bemerkbar und von einer Bedienperson ggf. als Bewegungsgrenze für die Auslenkung des Griffteils wahrnehmbar sein.

Druckpunkt und Kraftüberhöhung können kombiniert oder separat erzeugbar sein. Sie können für eine Bedienperson als von der Auslenkung abhängig und definiert ausgeprägt fühlbar oder anderweitig wahrnehmbar sein. Eine Bedienperson kann die Auslenkungsbewegung des Griffteils beim Auftreten eines Druckpunktes und/oder eines Rastpunktes und/oder einer Kraftüberhöhung stoppen oder trotz des erhöhten Widerstandes eine weitere Auslenkung des Griffteils vornehmen und dabei die Kraftüberhöhung oder den Druckpunkt überschreiten. Auf diese Weise ist es möglich, Informationen im haptischen Sinneskanal an die Bedienperson zu vermitteln. Diese Informationen können von der Bedienperson wahrgenommen und bei der Eingabe von Bedieninformationen berücksichtigt oder aber ignoriert bzw. absichtlich übergangen werden.

Die Fernbedienung kann besonders bevorzugt Teil eines Rangiersystems für Fahrzeuge sein. Das Rangiersystem kann insbesondere für Anhänger vorgesehen sein und mindestens zwei zeitweise oder dauerhaft an beiden Seiten des Fahrzeugs dessen Räder gesteuert antreibende Hilfsfahrantriebe aufweisen. Die am Fahrzeug angeordneten Komponenten werden zur besseren Unterscheidbarkeit als Rangiervorrichtung bezeichnet.

Die Veränderung der Kraftverläufe kann in Abhängigkeit von einem oder mehreren äußeren Stellsignalen einstellbar sein und auf unterschiedliche Weise erfolgen. Die für eine Bedienperson wahrnehmbaren Rückstellkräfte am Griffteil der Fernbedienung können sich hierbei aus ein, zwei oder mehreren Rückstellkräften an den aktiven Steuerelementen in definierter Weise zusammensetzen. Die Veränderung der Kraftverläufe kann in Abhängigkeit von beliebigen Steuer- oder Regelgrößen erfolgen. Sie kann insbesondere in Abhängigkeit von Bedienhandlungen und/oder deren Auswirkungen am zu steuernden Fahrzeug erfolgen. Besonders bevorzugt kann eine Veränderung der Rückstellkräfte in Abhängigkeit von einem Abstandssignal und/oder in Abhängigkeit von einer Antriebsreaktion erfolgen. Befindet sich ein zu rangierendes Fahrzeug beispielsweise in einer Hanglage, so tendiert es dazu, aufgrund der Schwerkraft hangabwärts zu rollen. Das Fahrzeug lässt sich aufgrund der mechanischen Begebenheiten leichter einen Hang hinunter bewegen, als den Hang hinauf. Entsprechend ist für eine hangabwärts gerichtete Bewegung des Fahrzeugs ein geringeres Antriebsmoment auf die Räder notwendig, als für eine hangaufwärts gerichtete Bewegung. Das Antriebsmoment kann auch in Bremsrichtung, also entgegen einer hangabwärts angestrebten Fahrbewegung gerichtet sein.

Die offenbarte Fernbedienung kann dazu ausgebildet sein, eine als leichtgängig empfundene Beweglichkeit des Griffteils in Richtung einer leichtgängigen Bewegung des Fahrzeugs und eine als schwergängig empfundene Beweglichkeit des Griffteils in Richtung einer schwergängigen Bewegung des Fahrzeugs zu vermitteln. Dies kann beispielsweise durch eine über der Auslenkung proportionale Anhebung der Rückstellkräfte erfolgen. Auf diese Weise können für die Bedienperson die tatsächlichen Antriebsreaktionen des Fahrzeugs auf seine Steuervorgaben am Bedienteil fühlbar gemacht werden. Einem versehentlichen Über- oder Untersteuern kann hierdurch auf intuitive Weise vorgebeugt werden und Bedienfehler werden vermieden.

Alternativ oder zusätzlich kann auch die Sensitivität eingestellt und ggf. verändert werden, mit der das Fahrzeug auf eine Auslenkung des Griffteils reagiert. So kann beispielsweise bei einem Fahrzeug, das an einem Hang steht, die Sensitivität in Hangrichtung verringert werden, sodass eine Auslenkung des Griffteils in dieser Richtung zu einer verhältnismäßig sanfteren, also langsameren oder weniger schnell beschleunigten Bewegung des Fahrzeugs führt, als in der ebenen Fahrt. In Bergrichtung kann in diesem Fall alternativ oder zusätzlich die Sensitivität erhöht werden, sodass Auslenkung des Griffteils in Bergrichtung zu einer verhältnismäßig stärkeren, also schnelleren oder überhöht beschleunigten Bewegung des Fahrzeugs führt, als in der ebenen Fahrt.

Besonders vorteilhaft kann die kombinierte Anwendung einer Vermittlung von leicht- oder schwergängiger Beweglichkeit des Eingabegeräts und der Veränderung der Sensitivität sein.

Das proportionale Anheben der Rückstellkräfte kann für die eine, zwei oder mehreren Auslenkungsrichtungen der Steuerelemente separat oder gemeinsam erfolgen.

Auch das Vorhandensein von Hindernissen wie beispielsweise Schlaglöchern, Bodenunebenheiten oder Bordsteinkanten sowie ein plötzliches Abgleiten des Fahrzeugs an einer Kante können für die Bedienperson an der Fernbedienung wahrnehmbar, insbesondere fühlbar gemacht werden. Einer Bedienperson kann somit an der Fernbedienung ein haptisches Gefühl für die Bewegungsreaktionen des zu steuernden Fahrzeugs vermittelt werden. Das Gefühl kann den Wahrnehmungen bei einem händischen Schieben und Ziehen des Fahrzeugs entsprechen oder diesem in einem kurzen Lernprozess zuordenbar sein. Hierdurch wird ein schnelles und intuitives Verständnis der dynamischen Reaktionen des Fahrzeugs begünstigt.

Ein Rangiersystem kann bevorzugt eine Messeinrichtung für Antriebsreaktionen eines Hilfsfahrantriebs aufweisen und zur Übertragung von Informationen über Antriebsreaktionen an die Fernbedienung ausgebildet sein. Alternativ oder zusätzlich kann ein Rangiersystem eine Erfassungseinrichtung für Umgebungsbedingungen, insbesondere für den Bewegungsfreiraum des Fahrzeugs aufweisen und zur Übertragung von Informationen über die erfassten Umgebungsbedingungen an die Fernbedienung ausgebildet sein.

An einem zu steuernden Fahrzeug können Sensoren angeordnet sein, die den Freiraum des Fahrzeugs zu einem detektierten Hindernis erfassen. Der Freiraum des Fahrzeugs kann beispielsweise in Form eines ein- oder mehrdimensionalen Abstands erfasst und in geeigneter Weise als Signal an die Fernbedienung übertragen werden. Im Kraftverlauf der Rückstellkräfte an den aktiven Steuerelementen können in Abhängigkeit von dem Abstandssignal lokale Kraftüberhöhungen und/oder Druckpunkte erzeugt werden. Die Kraftüberhöhungen können alternativ oder zusätzlich zu den vorgenannten proportionalen Änderungen der Rückstellkräfte erfolgen. Sie können zur haptischen Rückmeldung gleicher oder weiterer Informationen an die Bedienperson genutzt werden. Es können alternativ oder zusätzlich auch optische oder akustische Rückmeldungen erzeugt werden.

Es kann bevorzugt ein Verfahren zur Unterstützung des Rangierens eines Fahrzeugs mit einem Rangiersystem mit mehreren Hilfsfahrantrieben und einer Fernbedienung vorgesehen sein. Es kann hierbei vorteilhaft sein, dass eine Fahrbewegung des Fahrzeugs nach Richtung und Betrag durch eine Rotation eines Griffteils um seine Hochachse und/oder durch eine Translation oder Kippung des Griffteils gesteuert wird. Unabhängig von der Ausformung und Bedienbarkeit des Eingabegeräts kann bei einem solchen Verfahren bevorzugt eine haptische Rückmeldung über die Fahr- und/oder Bewegungssituation des Fahrzeugs an eine Bedienperson vermittelt werden. Alternativ oder zusätzlich kann eine Vorgabe für Bedienbefehle der Bedienperson an der Fernbedienung erfolgen. Die Vorgaben können dabei bevorzugt an der Fernbedienung vermittelt, insbesondere haptisch fühlbar gemacht werden.

Bei einer Einschränkung des Bewegungsraumes des Fahrzeuges durch Annäherung an ein Hindernis ist es beispielsweise möglich, einen Druckpunkt bei einer bestimmten Auslenkung des Griffteils zu erzeugen, der von einer Bedienperson als lokale Widerstandserhöhung fühlbar ist.

Ein solcher Druckpunkt kann beispielsweise bei noch großem Bewegungsraum des Fahrzeugs über einer starken Auslenkung des Griffteils erzeugt werden. Mit Annäherung des Fahrzeugs an das Hindernis und gleichzeitiger Einschränkung des Bewegungsraumes kann der Druckpunkt zu einer kleineren Auslenkung des Griffteils verschoben werden. Durch das Auftreten des Druckpunktes bei größerer oder geringerer Auslenkung des Griffteils kann für die Bedienperson fühlbar gemacht werden, ob noch ein großer oder ein kleiner Bewegungsraum für das Fahrzeug besteht. Die Bedienperson kann auf diese Weise auf Hindernisse im Umfeld des Fahrzeugs aufmerksam werden. Es kann sich hierbei auch um solche Hindernisse handeln, die sich aus der Sicht der Bedienperson hinter dem zu steuernden Fahrzeug befinden und von diesem verdeckt werden. Die Gefahr, dass ein Fahrzeug aufgrund unachtsamer Steuerung zur Kollision mit einem Hindernis gebracht wird, kann somit verringert werden.

Es kann auch möglich sein, dass durch die gezielte Vorgabe und Veränderung des lokalen Druckpunktes über der Auslenkung des Griffteils eine Unterstützung des Rangiervorgangs bei der Annäherung an Hindernisse erfolgt. Die Unterstützung kann bevorzugt eine Teilautomatisierung einer Annäherungsfahrt sein.

Beispielsweise kann eine Bedienperson bei Annäherung an ein Hindernis das Griffteil so weit auslenken, bis sie das Auftreten eines Druckpunktes spürt. Während der Annäherung verringert sich der Abstand zu dem Hindernis und der Druckpunkt im Kraftverlauf kann in kontrollierter Weise in Richtung einer geringeren Auslenkung verschoben werden. Die Bedienperson kann die Bewegung des Griffteils an die vorgegebene Verschiebung des Druckpunktes anlehnen, wobei auch das Griffteil in Richtung einer geringeren Auslenkung zurück bewegt wird. Hierdurch wird die Geschwindigkeit des Fahrzeugs reduziert und das Annähern verlangsamt sich.

Auf diese Weise kann eine im Sinne eines Regelkreises unterstützte Steuerung der Annäherungsbewegung eines rangierten Fahrzeugs an ein Hindernis erfolgen. Über das Zusammenwirken von gemessenem Bewegungsfreiraum und Veränderung des Kraftverlaufs der Rückstellkräfte kann eine gesteuerte Vorgabe für die Annäherungsbewegung erzeugt werden. Die Vorgabe kann derart gestaltet sein, dass bei einem noch großen Bewegungsraum eine verhältnismäßig zügige Annäherung mit größerer Geschwindigkeit erfolgt, wobei die Geschwindigkeit im Verlauf der Annäherung an das Hindernis immer weiter absinkt, bis das Fahrzeug mit einem ggf. einstellbaren Sollabstand zum Hindernis zum Stehen kommt. So können beispielsweise das Einparken von Anhängern oder Caravans auf engen Stellplätzen mit ggf. schlechter Einsehbarkeit erleichtert und die Gefahr von Beschädigungen durch versehentliche Kollision mit Hindernissen verringert werden.

Das genannte Verfahren der Teilautomatisierung ist unter der Annahme beschrieben, dass eine Auslenkung des Griffteils in eine Geschwindigkeitssteuerung des Fahrzeugs umgesetzt wird. Bei einer anderen Steuerungsart, wie bspw. einer Positionssteuerung oder einer Momentensteuerung kann das Verfahren entsprechend adaptiert sein.

In den Unteransprüchen sind weitere vorteilhafte Ausbildungen der Erfindung angegeben.

Die Erfindung ist in den Zeichnungen beispielsweise und schematisch dargestellt. Es zeigen:
- Figur 1 und 2:: Einen Anhänger mit einem Rangiersystem in Seitenansicht und Draufsicht,
- Figur 3 bis 5:: Eingabemöglichkeiten an einer Fernbedienung in Draufsicht,
- Figur 6:: Beweglichkeit eines Basisteils an einer Fernbedienung in Draufsicht,
- Figur 7 bis 17:: Eine Bedienperson beim Rangieren eines Fahrzeugs durch Eingabe von Bedieninformationen an einer Fernbedienung in schematischer Draufsicht,
- Figur 18:: Eine Explosionsdarstellung einer Fernbedienung in einer bevorzugten Ausführungsform,
- Figur 19:: Eine alternative Ausführungsform für eine Mechanik der Fernbedienung gemäß Teilen aus Figur 18,
- Figur 20 bis 24:: Informationsflussdiagramme für die Steuerung und Unterstützung eines Rangiervorgangs,
- Figur 24:: Mögliche Kraftverläufe für die Rückstellkräfte eines aktiven Steuerelements in einem F-x-Diagramm,
- Figur 25:: Eine Prinzipdarstellung eines aktiven Steuerelements in einer bevorzugten Ausführungsform, sowie
- Figur 26 bis 29:: Prinzipdarstellungen für mögliche Veränderungen der Rückstellkraft an einer Fernbedienung bei Annäherung eines zu steuernden Fahrzeugs an ein Hindernis.

Die Erfindung betrifft eine Bedienungseinrichtung (10), insbesondere eine Fernbedienung zur Steuerung von Fahrzeugen (1) mit einer Rangiervorrichtung (68). Die Erfindung betrifft auch ein Rangiersystem (70), welches eine Rangiervorrichtung (68) und eine Bedienungseinrichtung bzw. Fernbedienung (10) aufweist, sowie ein aktives Steuerelement (59). Die Offenbarung betrifft schließlich ein Verfahren zur Unterstützung des Rangierens von Fahrzeugen mit einer Rangiervorrichtung mittels einer Fernbedienung.

Das zu steuernde Fahrzeug (1) kann z.B. ein Anhänger mit einem beliebigen Aufbau, z.B. ein Wohnwagen, ein Verkaufswagen, ein Transporter, eine Hubbühne oder dgl. sein. Der Anhänger wird im normalen Fahrbetrieb von einem Zugfahrzeug gezogen und kann im abgekuppelten Zustand mit dem Rangiersystem (70) manövriert werden. Es kann sich auch um ein beliebiges anderes Fahrzeug mit einer Rangiervorrichtung, wie z.B. einen Flurförderer, einen Hubwagen, ein Reinigungsfahrzeug, eine fahrbare Treppe, ein Spielfahrzeug o.Ä. handeln. Das Fahrzeug (1) kann eine, zwei oder mehr Achsen mit beidseitigen Rädern aufweisen. Der Anhänger kann eine starre Deichsel oder eine bewegliche, insbesondere schwenkbare Deichsel aufweisen. In einer anderen Ausführung kann das Fahrzeug (1) Ketten oder dgl. statt Rädern haben.

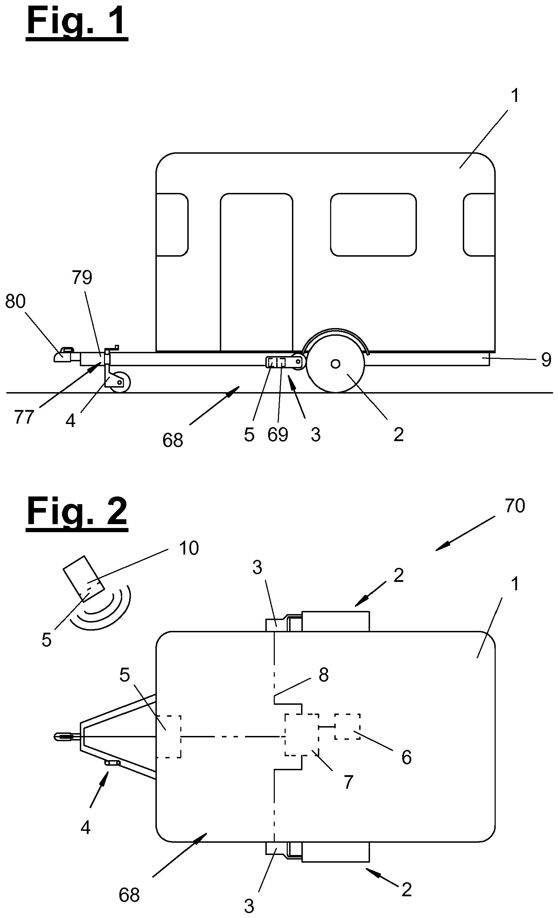

Das in den Figuren gezeigte Fahrzeug ist ein Anhänger oder Caravan und weist zwei oder mehr im Wesentlichen frei drehbare beidseitige Räder (2) und ggf. ein Stützrad (4) auf. Figur 1 und 2 zeigen einen solchen Anhänger (1) in schematischer Darstellung.

Im Weiteren wird aus Gründen der Verständlichkeit stets auf ein Fahrzeug (1) in Form eines Anhängers Bezug genommen, wobei die Offenbarung aber nicht hierauf beschränkt ist. Bei einem Anhänger ist die Rangiervorrichtung (68) ein Hilfsfahrantrieb. Vielmehr können die Merkmale der Offenbarung in ähnlicher Weise auf andere Fahrzeuge angewendet und an diese adaptiert werden, wobei die Rangiervorrichtung (68) ggf. einen Hauptantrieb darstellt. Die Fahrzeuge können über mehr als zwei Räder verfügen. Entsprechend kann eine Rangiervorrichtung (68) unterschiedlich ausgebildet sein.

Am gezeigten Fahrzeug (1) ist eine bevorzugte Form einer Rangiervorrichtung (68) angeordnet, die für eine Verwendung an Anhängern oder Caravans optimiert sein kann. Sie weist zwei oder mehr Hilfsfahrantriebe als Antriebseinheiten (3) auf. Die Antriebseinheiten (3) sind bevorzugt an beiden Seiten des Fahrzeugs (1) angeordnet, ggf. verschieblich an einem Fahrgestell (9) gelagert und können an jeweils eines der Räder (2) angestellt werden. Es können auch beliebige andere Rangierantriebe oder Hilfsfahrantriebe verwendet werden.

Die in den Zeichnungen dargestellten Antriebseinheiten (3) weisen z.B. Reibrollen auf, die über ein Antriebsmittel, z.B. einen Motor der Antriebseinheit (3) in Bewegung versetzt werden können. Mit diesen Reibrollen können die Antriebseinheiten (3) an die Räder (2) des Fahrzeugs (1), insbesondere an deren Laufflächen, zugestellt und angedrückt werden. Der Motor der Antriebseinheit (3) kann bei der Zustellung der Reibrolle ggf. mitbewegt werden. Er kann alternativ stationär am Fahrzeug (1) angeordnet sein. Ferner kann eine Zustellvorrichtung für die Reibrolle und ggf. die Antriebseinheit (3) mit beliebiger Zustellkinematik und mit manueller oder angetriebener Zustellung vorhanden sein. Durch eine angetriebene Bewegung der Reibrollen wird eine entsprechende Drehung der Räder (2) des Fahrzeugs (1) erzeugt, wobei die Drehungen der Räder (2) zu einer Bewegung des Fahrzeugs führen.

Die Antriebseinheit (3) kann z.B. gemäß der EP 1 394 024 A2, EP 1 714 859 A1, EP 2 138 387 A1 oder der WO 2006/061177 A1 ausgebildet sein. Alternativ sind andere Antriebselemente, z.B. Zahn- oder Reibräder mit Eingriff an einer Radfelge oder an anderer Stelle des Rades möglich, z.B. gemäß der EP 1 840 019 A.

Eine offenbarte Rangiervorrichtung (68) ist dazu ausgebildet, mit einer offenbarten Fernbedienung (10) zusammenzuwirken. Alternativ kann eine bestehende Rangiervorrichtung (68) mit abweichender Ausprägung für ein Zusammenwirken mit einer offenbarten Fernbedienung (10) adaptiert werden. Die offenbarte Fernbedienung kann auch an bestehende Rangiervorrichtungen ohne deren Veränderung angepasst werden.

Die Fernbedienung (10) kann von einer Bedienperson (30) bedient und bevorzugt getrennt vom Fahrzeug (1) geführt werden. Alternativ kann eine Fernbedienung (10) auch in Form einer Konsole an oder in einem Fahrzeug (1) befestigt sein. An der Fernbedienung (10) kann eine Bedienperson (30) Bedieninformationen (48) für ein Rangieren des Fahrzeugs (1) eingeben, die über die Antriebseinheiten (3) der Rangiervorrichtung (68) in Bewegungen der Räder (2) und somit des Fahrzeugs (1) umgesetzt werden.

Die Rangiervorrichtung (68) hat bevorzugt eine eigene Energieversorgung (6) oder ist an eine bestehende Energieversorgung des Fahrzeugs (1) angeschlossen. Sie kann eine Steuerung (7) zur gemeinsamen Ansteuerung von zwei oder mehr Antriebseinheiten (3) aufweisen oder mehrere Steuerungen (7) zur separaten Ansteuerung von Antriebseinheiten (3) und insbesondere jeweils eine Steuerung (7) für jede der Antriebseinheiten (3) aufweisen. Die Steuerungen (7) können in oder an den Antriebseinheiten (3) sowie separat angeordnet sein. Die einzelnen Komponenten und Bauteile der Rangiervorrichtung (68) können durch Leitungen (8), per Funk oder in sonstiger Weise zum Signal- und Energieaustausch miteinander verbunden sein. Ferner kann eine Hebe-/ Senkvorrichtung (77) zum vertikalen Bewegen der Deichsel und/oder der Anhängerkupplung vorgesehen sein, die ggf. mit der Steuerung (7) ist.

Die Rangiervorrichtung (68) kann eine oder mehrere Datenübertragungseinrichtungen (5) als Kommunikationsmittel zwischen der Rangiervorrichtung (68) und einer Fernbedienung (10) aufweisen. Eine derartige Datenübertragungseinrichtung (5) kann beispielsweise in singulärer Ausführung vorhanden sein und mit einer gemeinsamen Steuerung (7) für zwei oder mehr Antriebseinheiten (3) verbunden sein. Alternativ kann eine einzelne Datenübertragungseinrichtung (5) auch mit mehreren und ggf. an den Antriebseinheiten (3) angeordneten separaten Steuerungen (7) verbunden sein. Schließlich ist es auch möglich, dass jede der Antriebseinheiten (3) eine eigene Datenübertragungseinrichtung (5) aufweist. Eine Datenübertragungseinrichtung (5) an einem Fahrzeug (1) korrespondiert bevorzugt zu einer Datenübertragungseinrichtung (5) an der Fernsteuerung (10).

Eine Datenübertragungseinrichtung (5) kann beliebig ausgebildet sein. Sie kann insbesondere als kabellose Übertragungseinrichtung und zu einer Übertragung von Daten und/oder Signalen in elektrischer, optischer, elektromagnetischer oder sonstiger Weise ausgebildet sein. Alternativ kann sie kabelgebunden sein. Sie kann insbesondere zur bidirektionalen Informationsübertragung zwischen Rangiervorrichtung (68) und Fernbedienung (10) ausgebildet sein. Informationen wie bspw. Steuersignale oder Sensorsignale können als Rohdaten oder in verarbeiteter Form übertragbar sein. Die Übertragung kann digital und/oder analog erfolgen.

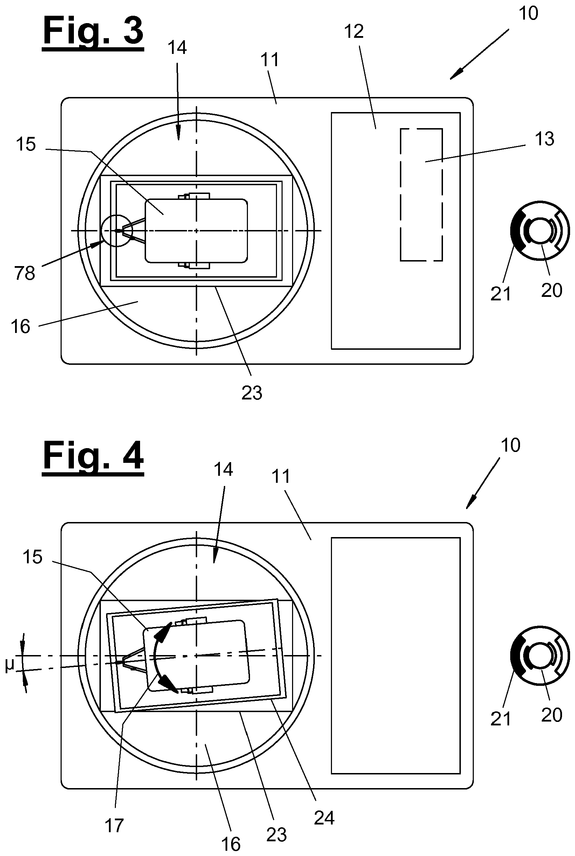

Figuren 3 zeigt eine bevorzugte Ausführungsform der Fernbedienung (10). Diese weist ein Gehäuse (11), ein Eingabegerät (14) sowie ggf. ein Tastenfeld (12) und ein Display (13) auf. Die Fernbedienung (10) kann eine eigene Energieversorgung (nicht dargestellt) und ggf. eine eigene Steuerung (nicht dargestellt) aufweisen.

Figuren 3 bis 5 verdeutlichen bevorzugte Möglichkeiten zur Eingabe von Bedieninformationen (48) am Eingabegerät (14). In den Figuren sind rechts neben der Darstellung der Fernbedienung (10) jeweils Symbole für die Orientierungen (20,21) von einem Griffteil (15) und einem Basisteil (16) dargestellt, die der Verdeutlichung von gleichen oder unterschiedlichen Orientierungen der genannten Bauteile dienen sollen.

Das Eingabegerät (14) weist ein Griffteil (15) auf, dessen äußere Form bevorzugt eine Nachbildung des zu steuernden Fahrzeugs (1) ist. Die Nachbildung kann detailgetreu oder abstrakt sein. Bei der gezeigten Ausführungsform handelt es sich um eine maßstabsgetreue Miniaturnachbildung des Fahrzeugs (1) aus Figur 1 und 2. Es kann aber auch bspw. ein quaderförmiger Grundkörper oder ein einfacher Drehknopf sein.

Die Fernbedienung (10) ist derart ausgebildet, dass in den Freiheitsgraden der Beweglichkeit des Eingabegerätes (14) die Freiheitsgrade der Beweglichkeit des zu steuernden Fahrzeugs (1) abgebildet sind.

Das in den Figuren dargestellte Fahrzeug (1) hat zwei seitlich angeordnete Räder (2) und ein Stützrad (4). Das Rangieren des Fahrzeugs (1) wird über seitlich an die Räder (2) anstellbare Antriebseinheiten (3) bewirkt. Ein derartiges Fahrzeug (1) hat im Wesentlichen zwei Freiheitsgrade für seine Beweglichkeit, nämlich einerseits eine Rotation um die Hochachse und andererseits eine Translation in Längsrichtung des Fahrzeugs (1).

Eine Bewegung des Fahrzeugs (1) kann dabei grundsätzlich innerhalb seiner Freiheitsgrade für die Beweglichkeit in beliebiger Weise erfolgen, wobei es zwei Extremfälle gibt, nämlich die reine Rotation und die reine Translation. Dazwischen sind beliebige Kombinationen von Translation und Rotation möglich. Diese äußern sich im Allgemeinen als Kurvenfahren. Eine reine Rotation des Fahrzeugs (1) um die Hochachse kann dadurch erzeugt werden, dass über die Antriebseinheiten (3) ein gegensinniges aber betragsmäßig gleich schnelles Drehen der Räder (2) erfolgt. In diesem Fall dreht der Anhänger auf der Stelle. Eine reine Translation in Längsrichtung des Fahrzeugs (1) kann dadurch erzeugt werden, dass die Räder (2) gleichsinnig und mit gleicher Drehgeschwindigkeit angetrieben werden. Dann fährt das Fahrzeug (1) geradeaus. Werden die Räder (2) mit unterschiedlichen Drehgeschwindigkeiten angetrieben, so ergibt sich hieraus eine Kurvenbewegung des Fahrzeugs (1).

Das Zentrum einer Kurvenbahn liegt im Wesentlichen auf einer imaginären Gerade durch die angetriebenen Räder. Bei Fahrzeugen mit mehr als einer Achse sind die Verhältnisse ähnlich, wobei das Zentrum einer Kurvenbahn ggf. zu der imaginären Gerade versetzt sein kann. Dies kann insbesondere dann der Fall sein, wenn die Räder von mehr als einer Achse durch die Rangiervorrichtung angetrieben werden. In diesem Fall kann das Zentrum einer Kurvenbahn zwischen zwei imaginären Geraden liegen, die jeweils durch die angetriebenen Räder der entsprechenden Achsen definiert sind.

Ob das Zentrum einer Kurvenbahn auf der genannten Geraden zwischen den Rädern (2) oder außerhalb der Räder liegt, hängt hauptsächlich vom Verhältnis der Drehgeschwindigkeiten sowie dem Verhältnis der Drehrichtungen (gleichsinnig oder gegensinnig) der Räder (2) ab. Die für die Ausführung der Erfindung erforderlichen physikalischen Gesetzmäßigkeiten lassen sich aus der Lehre der Momentanpole einer Bewegung ableiten und entsprechend in eine Steuerung oder Regelung umsetzen. Eine Bewegung auf einer Kurvenbahn ist durch eine geeignete rechnerische Transformation in einen Translationsanteil und einen Rotationsanteil zerlegbar. Ebenso kann mit einer geeigneten rechnerischen Transformation aus einer Überlagerung von Rotation und Translation eine Kurvenbahn berechnet werden. Damit sind für jede beliebige Kurvenbahn, aber auch für eine reine Translation oder einer reine Rotation die jeweiligen Bewegungsanteile an den Rädern bzw. Hilfsfahrantrieben ableitbar und umgekehrt.

Das Eingabegerät (14) der Fernbedienung (10) ermöglicht in der dargestellten Ausführungsform eine Rotation (17) des Griffteils (15) um seine Hochachse, die z.B. senkrecht oder schräg von der benachbarten Oberfläche der Fernbedienung (10) absteht. Ferner ist eine Translation (18) des Griffteils (15) möglich, die z.B. in Richtung seiner Längsachse verläuft. Die Translation ist bevorzugt eine lineare Schiebebewegung. Es kann alternativ eine Kippbewegung um eine Schwenkachse in oder parallel zur besagten Oberfläche vorgesehen sein. Rotation (17) und Translation (18) können als zweidimensionale Bewegung überlagert und gleichzeitig ausgeführt werden.

Eine Rechtsdrehung des Fahrzeugs (1) kann durch eine Rechtsdrehung des Griffteils (15) gesteuert werden. Eine Verschiebung des Griffteils (15) in Richtung der nachgebildeten Deichsel am Griffteil (15) führt hierbei zu einer Bewegung des Fahrzeugs (1) in Richtung der echten Deichsel am Fahrzeug (1). Somit besteht eine relative Gleichsinnigkeit zwischen den Freiheitsgraden der Beweglichkeit des Eingabegeräts (14) und den Freiheitsgraden der Beweglichkeit des zu steuernden Fahrzeugs (1), d.h. eine auf die getrennten Richtungsbezüge von Fahrzeug und Bedienelement gerichtete Gleichsinnigkeit. Diese ist von einer weiter unten erläuterten absoluten Gleichsinnigkeit zwischen Eingabegerät und zu steuerndem Fahrzeug zu unterscheiden.

Das Eingabegerät (14) kann ein Basisteil (16) aufweisen und ist bevorzugt über dieses Basisteil (16) drehbar im Gehäuse (11) der Fernbedienung (10) gelagert. An dem Basisteil ist ein Griffteil bevorzugt in Bezug auf eine Grundposition verdrehbar gelagert. Durch die Orientierung (21) des Basisteils (16) ist die Grundposition (23) des Griffteils (15) festgelegt. Bei einer Rotation (19) des Basisteils (16) erfolgt auch eine drehende Veränderung der Grundposition (23) des Griffteils (15). Zwischen Basisteil (16) und Grundposition (23) des Griffteils (15) besteht bevorzugt ein fester Bezug.

Bedieninformationen (48) können über eine Rotation (17) und/oder eine Translation (18) des Griffteils (15) gegenüber der Grundposition (23) eingegeben werden, wobei das Griffteil (15) manuell in eine ausgelenkte Position (24) bewegt wird. Solange das Griffteil (15) unberührt ist, nimmt es die gleiche Position und Orientierung ein, wie das Basisteil (16), es richtet sich also nach der Grundposition (23) aus. Diese Ausrichtung geschieht bevorzugt über Rückstellkräfte. Zur Eingabe von Bedieninformationen (48) kann eine Bedienperson (30) das Griffteil (15) angreifen und unter Überwindung der Rückstellkräfte aus der Grundposition (23) in eine ausgelenkte Position (24) bewegen.

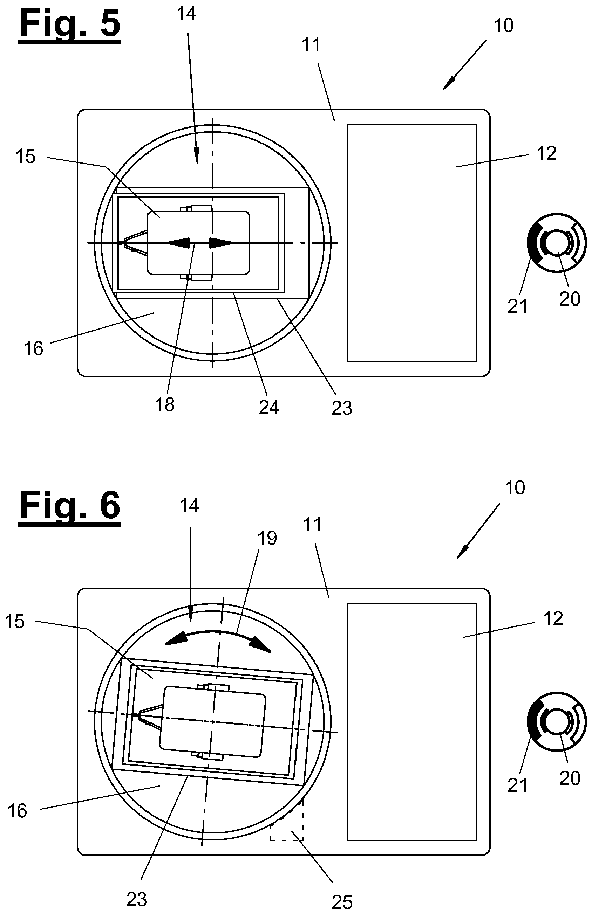

Die Fernbedienung (10) weist bevorzugt einen Stellmechanismus (25) zur Rotation (19) des Eingabegeräts (14) auf. Der Stellmechanismus (25) greift in der gezeigten Ausführungsform am Basisteil (16) an und bewirkt eine Drehung des Basisteils (16) um seine Hochachse. Der Stellmechanismus (25) kann manuell und/oder automatisch betätigbar sein. Er kann über einen eigenen Antrieb verfügen. Zur manuellen Betätigung des Stellmechanismus (25) kann ein entsprechender Bereich am Tastenfeld (12) der Fernbedienung (10) oder an anderer geeigneter Stelle vorgesehen sein. Alternativ oder zusätzlich kann auch eine händische Bewegung des Basisteils (16) möglich sein. Figur 6 verdeutlicht die mögliche Rotation (19) des Basisteils (16) um dessen Hochachse.

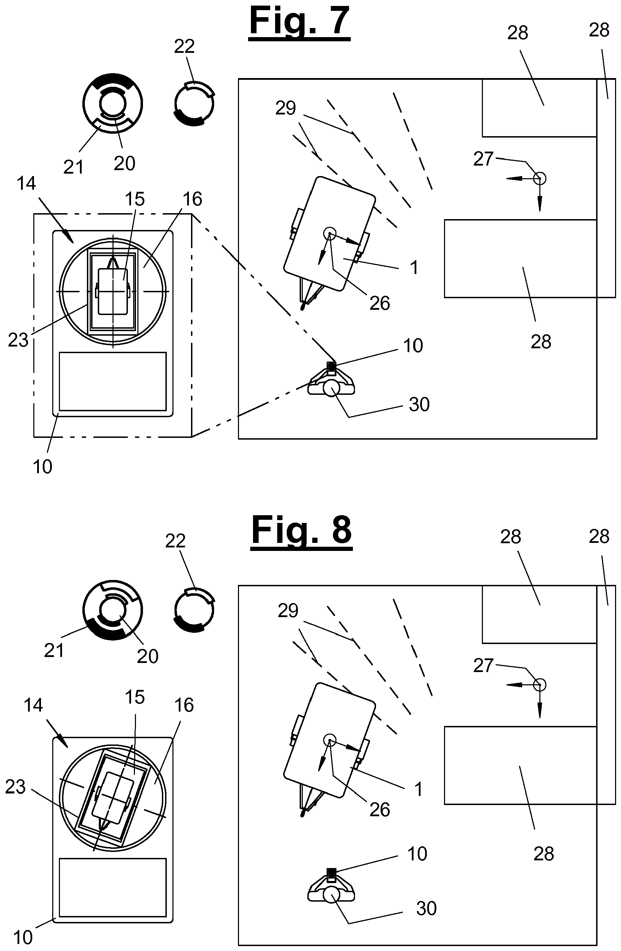

Figur 7 zeigt eine Draufsicht auf ein Fahrzeug (1), welches von einer Bedienperson (30) mittels einer Fernbedienung (10) von einer momentanen Position (26) aus zu einer Zielposition (27) rangiert werden soll. Figur 7 beinhaltet ferner eine vergrößerte Detailansicht der Fernbedienung (10) und dem darauf befindlichen Eingabegerät (14) sowie symbolhafte Darstellungen für die Orientierungen (20, 21, 22) von Griffteil (15), Basisteil (16) und Fahrzeug (1). In den Figuren 8 bis 17 sind entsprechende Darstellungen gezeigt, die nacheinander den Ablauf einer ferngesteuerten Rangierbewegung beispielhaft darstellen.

In dem gezeigten Beispiel soll ein Fahrzeug (1) mittels der Rangiervorrichtung (68) über Bodenunebenheiten (29) hinweg zu einer Zielposition (27) bewegt werden, wobei vorhandene Hindernisse (28) umfahren werden sollen. Das Beispiel dient der Erläuterung von Vorgängen und Problemen, die beim Rangieren auftreten können. Ein tatsächlicher Rangiervorgang kann hiervon in beliebiger Weise abweichen. Der als Beispiel dienende Rangiervorgang beginnt in der in Figur 7 gezeigten Konstellation. Die Bedienperson (30) steht hierbei schräg vor dem Fahrzeug (1) und blickt auf dessen Vorderseite, also diejenige Seite, an der die Zugdeichsel angeordnet ist.

Das Eingabegerät (14) der Fernbedienung (10) kann in einer beliebigen Ausgangsposition orientiert sein. In Figur 7 ist es derart ausgerichtet, dass die Bedienperson (30) auf die Rückseite des Griffteils (15) blickt, also die Seite, die der Zugdeichsel abgewandt ist. Die räumliche Orientierung (20) des Griffteils (15) sowie die räumliche Orientierung (21) des Basisteils (16) entsprechen also nicht der räumlichen Orientierung (22) des Fahrzeugs (1). Dies ist auch über die Symbole (21, 22, 23) verdeutlicht.

Würde die Bedienperson (30) in der Konstellation von Figur 7 das Griffteil (15) in Richtung der Griffteil-Deichsel von sich weg bewegen, so würde diese Bedieninformation eine Bewegung des Fahrzeugs (1) in Richtung von dessen Zugdeichsel, also auf den Bediener (30) zu, bewirken. Eine Verschiebung des Griffteils (15) von der Bedienperson (30) weg würde also zu einer Bewegung des Fahrzeugs (1) zur Bedienperson (30) hin bewirken. Die relative Gleichsinnigkeit der Eingabebewegung am Griffteil (15) und der ausgeführten Bewegung am Fahrzeug (1) ist also gegeben. Da die Orientierungen (21,22) von Basisteil (16) und Anhänger (1) einander in diesem Fall aber nicht entsprechen, steht aus Sicht der Bedienperson (30) in absoluten Koordinaten die Richtung einer Vorwärtsbewegung des Fahrzeugs (1) im Widersinn zu der dafür zu tätigenden Verschiebung des Griffteils (15) an der Fernbedienung (10). Die Bedienperson (30) müsste in der Konstellation von Figur 7 eine gedankliche Transformation durchführen, bei der sie sich das Griffteil (15) beispielsweise in die räumliche Orientierung des Fahrzeugs (1) hineingedreht vorstellt, um eine korrekte Zuordnung der Richtungsbezüge vorzunehmen. Dies stellt eine komplexe Geistesleistung dar, wobei eine hohe Verwechslungsgefahr bei der Richtungssteuerung des Rangiervorgangs bestehen kann und bei einer Unachtsamkeit der Bedienperson Unfälle verursacht werden können.

Bei der offenbarten Fernbedienung (10) kann über eine Rotation des Basisteils (16) eine Anpassung der Orientierung (21) des Basisteils (16) an die Orientierung (22) des Fahrzeugs (1) erfolgen, wobei auch die Grundposition (23) des Griffteils (15) gedreht wird. Auf diese Weise lässt sich auch eine absolute Gleichsinnigkeit zwischen den Freiheitsgraden der Beweglichkeit des Eingabegeräts (14) und den Freiheitsgraden der Beweglichkeit des zu steuernden Fahrzeugs (1) herstellen. Dies ist im Übergang von Figur 7 zu Figur 8 dargestellt.

Die Bedienperson (30) kann beispielsweise über eine Betätigung des Stellmechanismus (25) eine Rotation des Basisteils (16) bewirken, sodass die Orientierung (21) des Basisteils (16) aus Sicht der Bedienperson an die tatsächliche Orientierung (22) des Fahrzeugs (1) angeglichen wird. Hierdurch wird auch die Grundposition (23) des Griffteils (15) ausgerichtet.

Das Ergebnis einer solchen Angleichung der Orientierung (21) ist in Figur 8 dargestellt. In dieser Konstellation bewirkt eine Verschiebung des Griffteils (15) von der Bedienperson (30) weg auch eine gleichsinnige Bewegung des Fahrzeugs (1) von der Bedienperson (30) weg. Der Richtungsbezug für die Eingabe von Bedieninformationen (48) und der Richtungsbezug für die Ausführung dieser Bediensignale stehen also nicht nur im relativen, sondern auch im absoluten Gleichsinn. Die Bedienperson (30) braucht nicht zwischen den geometrischen Bezügen umzudenken bzw. muss keine geistige Richtungstransformation ausführen. Hierdurch wird eine besonders einfache und intuitive Bedienung ermöglicht.

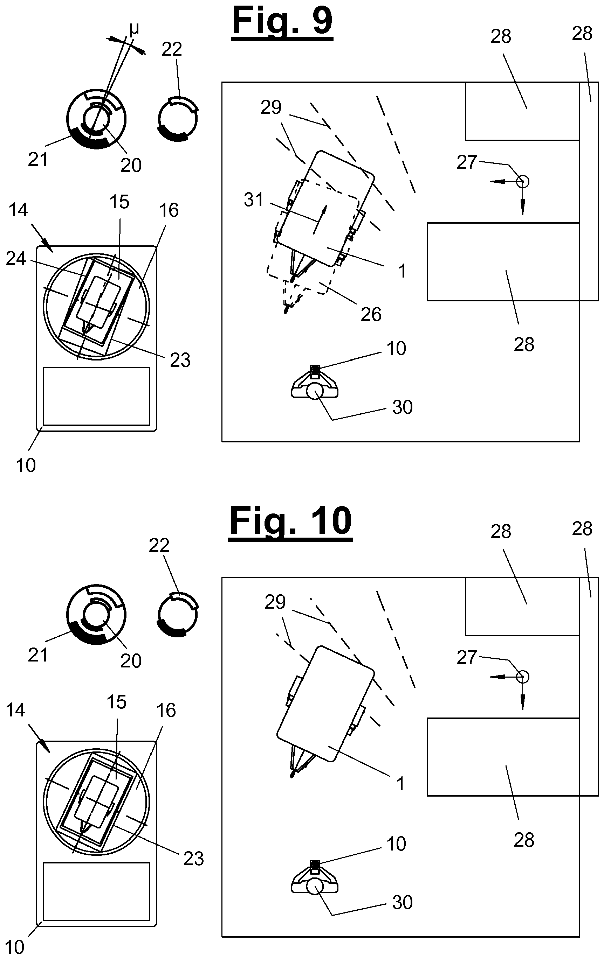

Möchte die Bedienperson (30) das Fahrzeug (1) in einer leichten Rechtskurve von sich weg bewegen, so kann sie eine entsprechende Bedieninformation (48) über eine dazu im Wesentlichen kongruente Verschiebung des Griffteils (15) gegenüber seiner Grundposition (23) eingeben. Das Griffteil (15) wird dabei unter Überwindung der Rückstellkräfte in eine ausgelenkte Position (24) bewegt. In Figur 9 ist dies dargestellt.

Zur Eingabe der gewünschten Bewegung des Fahrzeugs (1) gemäß dem Fahrtweg (31) kann die Bedienperson (30) das Griffteil (15) durch eine überlagerte Translation und Rotation in einer Kurvenbahn schräg von sich weg bewegen. Die Orientierung (20) des Griffteils (15) kann hierbei die gewünschte Soll-Orientierung des Fahrzeugs (1) am Ende des Fahrtwegs (31) angeben. Die durch die Auslenkung des Griffteils (15) erzeugten Steuersignale können durch die Antriebseinheiten (3) der Rangiervorrichtung (68) in eine bevorzugt kongruente Bewegung des Fahrzeugs (1) umgesetzt werden. Während der Kurvenfahrt des Fahrzeugs (1) ändert sich kontinuierlich dessen Orientierung (22), und zwar so lange, bis die gewünschte und am Griffteil (15) vorgegebene Soll-Orientierung erreicht ist. Der Fahrtweg (31) setzt sich hierbei aus einer Translation in Längsrichtung und einer Rotation um die Hochachse des Fahrzeugs (1) zusammen.

Aus der Drehung der Räder (2) des Fahrzeugs (1) sind der Translations- und der Rotationsanteil des Fahrtwegs (31) herleitbar. Dynamische Größen wie Drehung, Drehgeschwindigkeit oder Antriebsmomente können über eine oder mehrere Messeinrichtungen (69) an den Antriebseinheiten (3) der Rangiervorrichtung (68) erfassbar sein. Die erfassten Daten und/oder der daraus hergeleitete Rotationsanteil an der Bewegung des Fahrzeugs (1) können an die Fernbedienung (10) rückgemeldet werden und dort in eine entsprechende Rotation (19) des Basisteils (16) umgesetzt werden. Dies ist eine Möglichkeit, wie während der Kurvenfahrt die Orientierung (21) des Basisteils (16) und damit die Grundposition (23) des Griffteils (15) der Orientierung (22) des Fahrzeugs (1) nachgeführt werden können.

Alternativ oder zusätzlich können die Fernbedienung (10) und die Rangiervorrichtung (68) jeweils Mittel zur Feststellung der zueinander relativen oder absoluten räumlichen Orientierungen (21,22) von Basisteil (16) und Fahrzeug (1) aufweisen. Dies können beispielsweise mechanische oder elektrische Kompasse sein. Eine direkte Abstimmung der Orientierungen (21,22) kann auch über optische, akustische oder elektromagnetische Peil- oder Positioniersignale erfolgen. Auch beliebige andere technische Lösungen sind möglich und liegen im Bereich des fachmännischen Könnens.

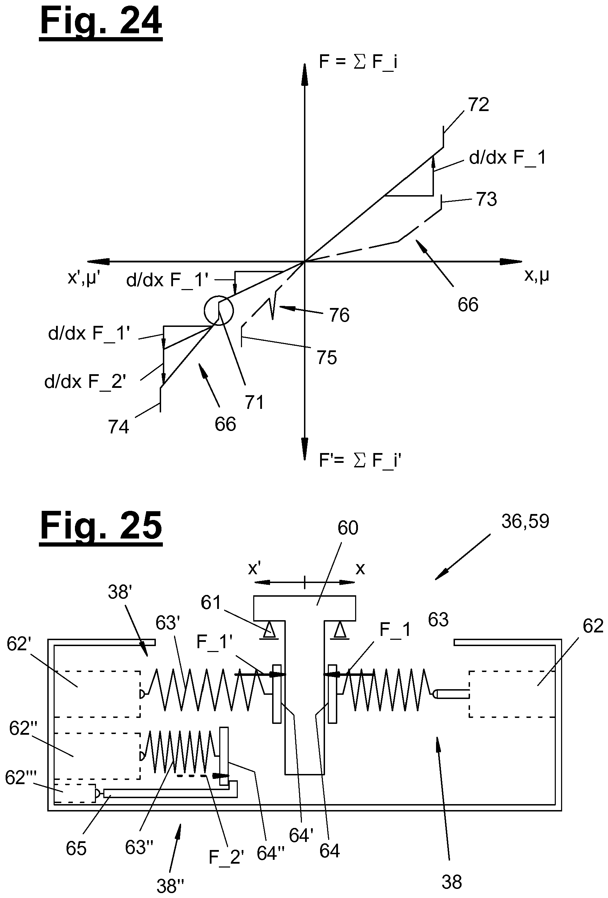

Eine Auslenkung des Griffteils (15) gegenüber der Grundposition (23) erfolgt bevorzugt unter Überwindung von Rückstellkräften. Hierzu können auch Rückstellmomente zählen. Die Rückstellkräfte können in definierter Weise vorgegeben sein, sodass beispielsweise bei einer größeren Auslenkung des Griffteils (15) proportional größere Rückstellkräfte zu überwinden sind als bei einer kleineren Auslenkung. Die Rückstellkräfte am Griffteil können dabei aus Rückstellkräften (F) an Steuerelementen (35,36) abgeleitet sein. Ein Beispiel für eine proportionale Abhängigkeit der Rückstellkräfte (F) von einer Auslenkung (x, µ) ist im ersten Quadranten des F-x-Diagramms von Figur 24 als durchgezogene Linie für den Kraftverlauf (72) dargestellt.

Während der Nachführung der Orientierung (21) des Basisteils (16) kann die Auslenkung des Griffteils (15) gegenüber der ebenfalls nachgeführten Grundposition (23) zurückgehen. Dementsprechend können während der Nachführung des Basisteils (16) auch die für die Bedienperson (30) im Griffteil (15) spürbaren Rückstellkräfte am Griffteil (15) abnehmen. Die Bedienperson (30) kann hierdurch an der Fernbedienung (10) bzw. am Eingabegerät (14) erfühlen, ob und ggf. wie stark die tatsächliche Orientierung (22) des Fahrzeugs (1) von der über das Griffteil (15) vorgegebenen Soll-Orientierung (20) abweicht.

Figur 10 zeigt die Konstellation am Ende der ersten Rangierbewegung. Die Bedienperson (30) greift zu diesem Zeitpunkt das Griffteil (15) nicht an, sodass dieses durch die Rückstellkräfte in die Grundposition (23) zurückbewegt ist. Wie aus den Symbolen zu erkennen ist, stimmen die Orientierungen (20, 21, 22) von Griffteil (15), Basisteil (16) und Fahrzeug (1) überein.

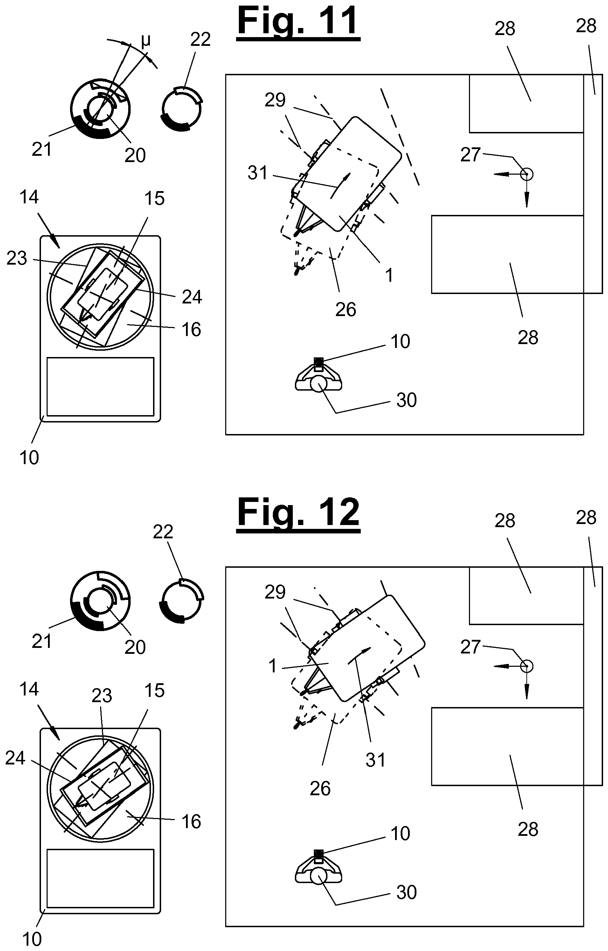

In einer weiteren Rangierbewegung des Beispiels, die in Figur 11 dargestellt ist, wird das Fahrzeug (1) auf einem rechtsgekrümmten Fahrtweg (31) bewegt. Hierbei überfährt das Fahrzeug (1) eine Bodenunebenheit (29). Die Bedienperson (30) bringt das Griffteil (15) entsprechend des gewünschten Fahrtwegs (31) in eine nach rechts vorne ausgelenkte Position (24). Zur Bewegung des Griffteils (15) überwindet die Bedienperson (30) die am Griffteil (15) anliegenden Rückstellkräfte. Durch die Auslenkung des Griffteils (15) werden Steuersignale erfasst, die an die Rangiervorrichtung (68) übertragen und dort in eine angetriebene Bewegung der Räder (2) des Fahrzeugs (1) umgesetzt werden. Die Antriebseinheiten (3) wirken dabei bevorzugt Antriebsmomente auf die Räder (2) des Fahrzeugs (1) aus.

Es kann eine beliebige Steuer- oder Regel Art für die Bewegung des Fahrzeuges genutzt sein. Insbesondere kann eine Geschwindigkeitssteuerung oder -regelung vorgesehen sein, sodass durch eine bestimmte Auslenkung des Griffteils eine bestimmte Soll-Geschwindigkeit für die Räder (2) und/oder das Fahrzeug (1) vorgegeben wird. Die Räder (2) können dann auf eine entsprechende Ist-Geschwindigkeit gesteuert oder geregelt werden. Alternativ kann durch eine Auslenkung des Griffteils (15) eine bestimmte Vorgabe für ein Soll-Antriebsmoment oder eine andere geeignete Größe vorgegeben werden.

Die für eine Bewegung des Fahrzeugs (1) erforderlichen Antriebsmomente stehen in einer Wechselwirkung zu den äußeren Bedingungen der Fahrsituation. Es können insbesondere Antriebsreaktionen an den Rädern (2) und an den Antriebseinheiten (3) entstehen. Zur Überwindung einer Bodenunebenheit (29) kann beispielsweise ein höheres Antriebsmoment erforderlich sein, als für eine Fahrt auf einem flachen Ebenenstück. Ferner kann das erforderliche Antriebsmoment von der Beschaffenheit des Untergrundes oder anderen Umgebungsparametern abhängig sein.

Die Antriebseinheiten (3) können bevorzugt Messeinrichtungen (69) aufweisen, die zur Erfassung von Antriebsreaktionen ausgebildet sind. Die Messeinrichtungen (69) können beliebig ausgebildet sein. Beispielsweise kann eine Ermittlung der Antriebsmomente über eine Messung von Motorströmen an den Antriebseinheiten (3) erfolgen. Es sind auch beliebige andere technische Möglichkeiten zur Erfassung von Antriebskräften oder Antriebsmomenten möglich. Ferner können auch andere Antriebsreaktionen wie beispielsweise das Beschleunigen der Räder (2) feststellbar sein.

Die Rückstellkräfte, die einer Auslenkung des Griffteils (15) entgegenstehen, können einen definierten Kraftverlauf über der Auslenkung aufweisen. Der Kraftverlauf kann beispielsweise derart sein, dass eine Rückstellkraft mit steigender Auslenkung proportional ansteigt. In einer bevorzugten Ausführungsform der Fernbedienung (10) kann der Proportionalitätsfaktor für den Anstieg der Rückstellkraft veränderlich sein. Eine Veränderung des Proportionalitätsfaktors kann beispielsweise in Abhängigkeit von äußeren Stellsignalen erfolgen. Für eine Bedienperson (30) kann eine solche Veränderung des Kraftverlaufs als proportionale Anhebung der Rückstellkraft bzw. des zu überwindenden Widerstands fühlbar sein. Entsprechend kann auch eine Herabsetzung der Rückstellkraft möglich sein. Eine Bewegung des Griffteils (15) kann hierdurch als eher schwer- oder eher leichtgängig wahrnehmbar sein.

Das Anheben oder Herabsetzen der Rückstellkraft kann in unterschiedlicher Weise und in Abhängigkeit von unterschiedlichen Signalen erfolgen. In einer bevorzugten Ausführungsform der Erfindung kann eine Anhebung bzw. ein Herabsetzen der Rückstellkraft in Abhängigkeit von den Antriebsreaktionen am Fahrzeug (1) erfolgen.

Bei der Überwindung einer Bodenunebenheit (29) können an den Antriebseinheiten (3) für eine Bewegung des Fahrzeugs (1) zwischenzeitlich höhere oder niedrigere Antriebsmomente erforderlich sein. Die dabei auftretenden Antriebsreaktionen können an der Fernbedienung (10) durch eine Veränderung der Rückstellkraft für das Griffteil (15) abgebildet werden. Eine Veränderung der Rückstellkraft kann beispielsweise derart erfolgen, dass solche Antriebsreaktionen, die einer Bewegung des Fahrzeugs (1) entgegenwirken, durch eine Anhebung der Rückstellkräfte am Griffteil (15) umgesetzt werden. Entsprechend können Antriebsreaktionen, die eine Bewegung des Fahrzeugs (1) begünstigen, durch eine Herabsetzung der Rückstellkräfte am Griffteil umgesetzt werden. Auf diese Weise können die Antriebsreaktionen am Fahrzeug (1) für eine Bedienperson (30) an der Fernbedienung (10) fühlbar und intuitiv verständlich gemacht und eine schnelle Reaktion der Bedienperson (30) auf die dynamischen Vorgänge während des Rangierens begünstigt werden.

In den Figuren 12 bis 14 sind weitere Teilschritte des Rangiervorgangs dargestellt. Das Fahrzeug (1) wird hierbei durch schrittweises Hin- und Herfahren auf Fahrtwegen (31) rangiert. Dabei kann das Fahrzeug (1) in Vorwärts- und Rückwärtsbewegungen gesteuert werden, wobei jeweils die Orientierung (21) des Basisteils (16) der Orientierung (22) des Fahrzeugs (1) nachgeführt und die absolute Gleichsinnigkeit der Orientierungen (21,22) aufrechterhalten wird.

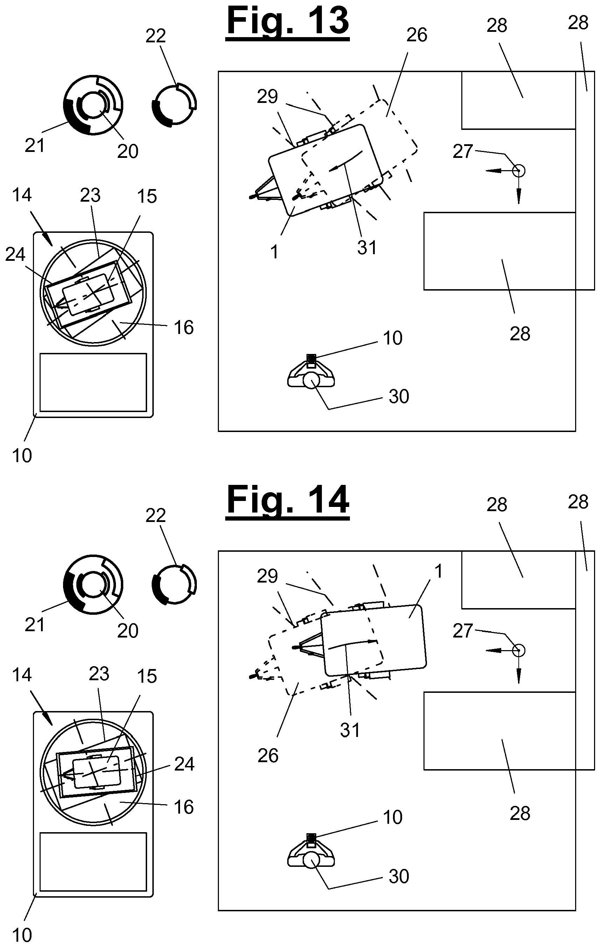

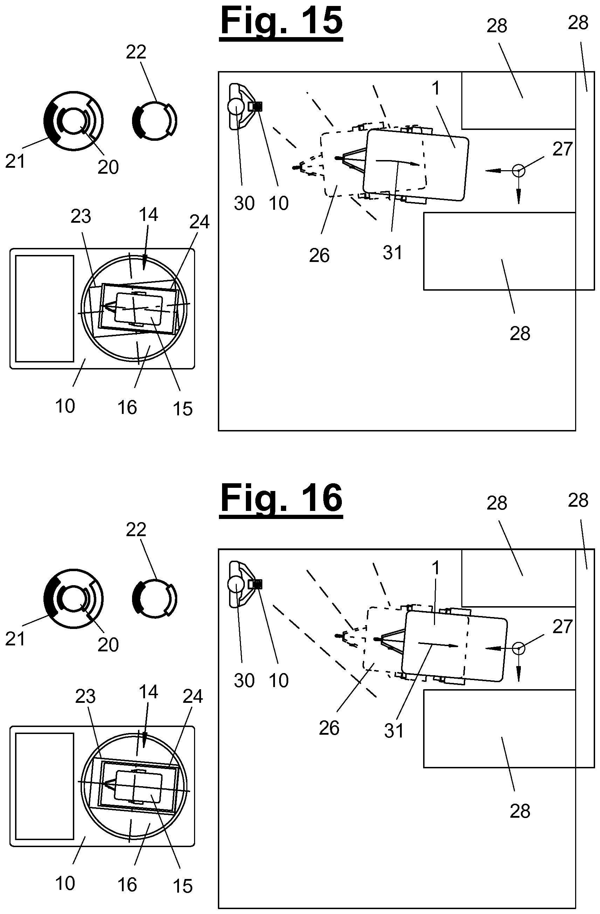

In Figur 14 ist das Fahrzeug (1) derart platziert, dass es in einer zur Einfahrt zwischen die Hindernisse (28) geeigneten Position ist. Jedoch ist aus dem momentanen Standpunkt der Bedienperson (30) die Zielposition (27) des Anhängers (1) durch das näher bei ihm liegende Hindernis (28) verdeckt. Um sich eine bessere Sicht zu verschaffen geht die Bedienperson (30) in dem gezeigten Beispiel um die Vorderseite des Anhängers (1) herum und bezieht eine neue Standposition. Dies ist im Übergang von Figur 14 zu Figur 15 dargestellt. Durch das Wechseln der Standposition dreht sich auch die Bedienperson (30) und nimmt dabei die Fernbedienung (10) mit. Hierbei kann wiederum die Orientierung (21) des Basisteils (16) manuell oder automatisch nachgeführt werden, sodass auch am neuen Standpunkt der Bedienperson (30) die Orientierungen (21,22) von Basisteil (16) und Fahrzeug (1) übereinstimmen.

Wie auch in den Figuren 15 bis 17 dargestellt, kann ein Rangieren von Fahrzeugen (1) unter teilweise sehr engen Bedingungen erfolgen. Es kann dabei erforderlich sein, dass das Fahrzeug (1) nahe an Hindernisse (28) angenähert wird, wobei jedoch eine Kollision des Fahrzeugs (1) mit Hindernissen (28) zu vermeiden ist. Eine Bedienperson (30) muss daher stets überwachen und erkennen, wie der Bewegungsraum des Fahrzeugs (1) beschaffen ist. Je nach Ausführungsform des Fahrzeugs (1) kann es hierbei vorkommen, dass ein ggf. auch relativ großer Bereich des Bewegungsraums für eine Bedienperson (30) zumindest zeitweise verdeckt und nicht einsehbar ist.

An einer offenbarungsgemäßen Rangiervorrichtung (68) kann eine Erfassungseinrichtung für Umgebungsbedingungen angeordnet sein. Es können insbesondere Sensoren angeordnet sein, die für eine Erfassung des Bewegungsraums des Fahrzeugs (1) ausgebildet sind. Die Ausführung der Erfassungseinrichtung oder der Sensoren kann beliebig sein. Es können insbesondere Abstandssensoren (67) sein. Der von den Abstandssensoren (67) erfasste Bewegungsraum des Fahrzeugs (1) kann bspw. in Form eines oder mehrerer Abstandssignale an die Fernbedienung (10) übertragen werden.

Alternativ oder zusätzlich zu der zuvor beschriebenen proportionalen Anhebung oder Absenkung der Rückstellkräfte kann bei der offenbarten Fernbedienung (10) auch eine definierte unstetige Beeinflussung des Kraftverlaufs (F) über der Auslenkung (x, µ) erfolgen. Eine Beeinflussung kann insbesondere durch die Erzeugung einer Kraftüberhöhung (66) und/oder eines Druckpunkts (71) und/oder Rastpunktes (76) im Kraftverlauf erfolgen.

Figur 24 zeigt beispielhaft unterschiedliche Kraftverläufe (72, 73, 74, 75) für eine Rückstellkraft (F) über einer Auslenkung (x, µ). Im ersten Quadranten ist eine gestrichelte Linie dargestellt, die einen Kraftverlauf (73) mit einer Kraftüberhöhung (66) zeigt. Die Kraftüberhöhung (66) kann beispielsweise derart ausgebildet sein, dass ab einer bestimmten Auslenkung (x) der Gradient der Rückstellkraft (F) über der Auslenkung (x) überproportional und im Punkt der Kraftüberhöhung (66) unstetig ansteigt. Dies ist in dem genannten Kraftverlauf (73) als Knick dargestellt. Alternativ oder zusätzlich kann in einem Kraftverlauf (hier bspw. Kraftverlauf 74) auch ein sprunghafter Anstieg der Rückstellkraft (F) als sog. Druckpunkt (71) erzeugt werden. Das Auftreten einer solchen Kraftüberhöhung (66) und/oder eines Druckpunktes (71) kann in Ausprägung und Zuordnung zu einer bestimmten Auslenkung (x, µ) einstellbar und veränderlich sein. Eine Rückstellkraft (F) kann hierbei durch eine Superposition von mehreren Teilkräften (F_i) erfolgen.

Ferner kann in einem Kraftverlauf (hier bspw. Kraftverlauf 75) alternativ oder zusätzlich ein Rastpunkt (76) erzeugt werden, also eine nur bei einer bestimmten Auslenkung (x, x') lokal auftretende, sprungartige Anhebung der Rückstellkraft (F), wobei die Rückstellkraft bei Überschreitung des Rastpunktes (76) wieder auf den vorherigen Gradienten der Rückstellkraft zurückgeht. Dies ist in dem mit gestrichelter Linie dargestellten Kraftverlauf (75) skizziert.

In einer bevorzugten Ausführungsform der Erfindung kann ein Kraftverlauf (72, 73, 74, 75) für die Rückstellkraft (F) über einer Auslenkung (x, µ) in Abhängigkeit von erfassten Umgebungsbedingungen, beispielsweise in Abhängigkeit vom erfassten Bewegungsraum des Fahrzeugs (1) veränderlich sein. Insbesondere kann der Kraftverlauf (72, 73, 74, 75) in Abhängigkeit eines über Abstandssensoren (67) gemessenen Abstands (d) des Fahrzeugs (1) von einem Hindernis (28) veränderlich sein.

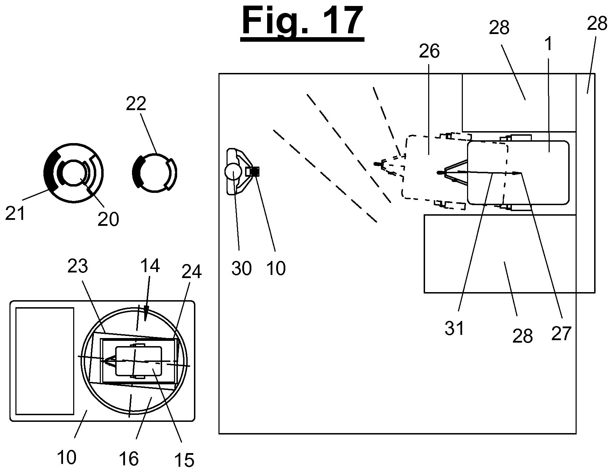

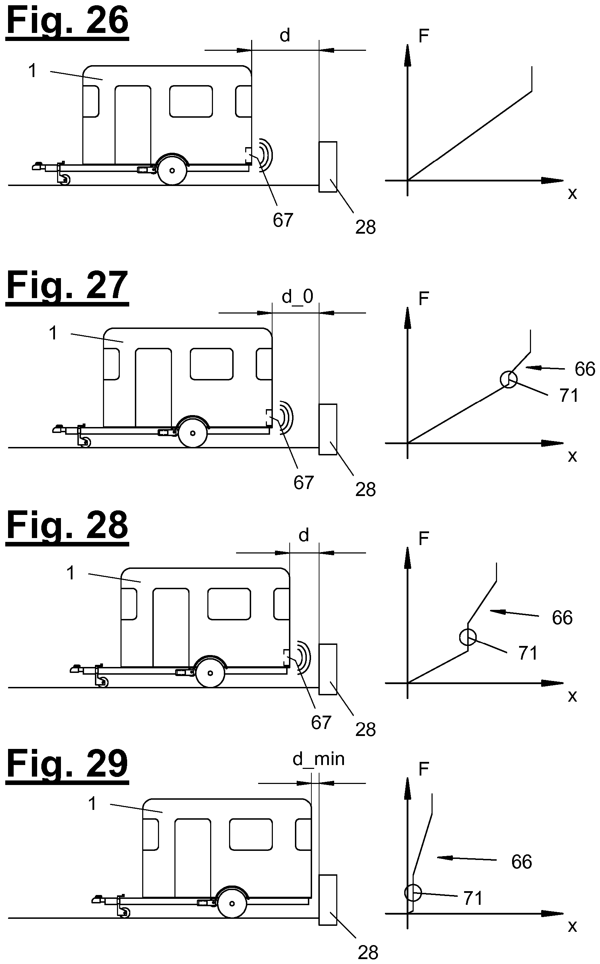

In Figuren 26 bis 29 ist beispielhaft eine Möglichkeit für eine solche Veränderung des Kraftverlaufs angegeben. Figur 26 zeigt ein Fahrzeug (1) in Seitenansicht, das einen noch vergleichsweise großen Abstand (d) zu einem dahinter befindlichen Hindernis (28) hat. Man vergleiche hierzu ggf. die in Figur 16 und 17 dargestellte Annäherung des Fahrzeugs (1) an die Zielposition (27). Wie Figur 26 zeigt, können an einer, zwei oder mehreren Seiten des Fahrzeugs (1) jeweils ein, zwei oder mehr Abstandssensoren (67) angeordnet sein. Die Abstandssensoren (67) können bevorzugt zur Messung des Abstands (d) des Fahrzeugs (1) gegenüber einem Hindernis (28) ausgebildet sein und ein entsprechendes Abstandssignal (57) erzeugen. Es können auch mehrere separate Abstandssignale (57) erzeugt werden.

Bei einer Annäherung des Fahrzeugs (1) an ein im Umfeld befindliches Hindernis (28) wird der Bewegungsraum eingeschränkt. Insbesondere verkleinert sich der zwischen Fahrzeug (1) und Hindernis (28) bestehende Abstand (d). Ab einem bestimmten und ggf. einstellbaren Abstand (d_0), kann wie in Figur 27 in dem rechten F-x-Diagramm dargestellt, eine lokale Kraftüberhöhung (66) und/oder ein Druckpunkt (71) im Kraftverlauf erzeugt werden. Der besagte Abstand (d_0) kann beispielsweise der Messreichweite der Sensoren (67) entsprechen. Er kann auch geringer und ggf. einstellbar und/oder veränderlich sein.

Die Kraftüberhöhung (66) und/oder der Druckpunkt (71) können für eine Bedienperson (30) als zusätzlicher Widerstand bei der Auslenkung des Griffteils (15) fühlbar sein. Die Kraftüberhöhung (66) und/oder der Druckpunkt (71) können insbesondere als fühlbare Begrenzung für die Bewegung des Griffteils (15) wahrnehmbar sein.

Bei weiterer Annäherung des Fahrzeugs (1) an das Hindernis (28) können die Kraftüberhöhung (66) und/oder der Druckpunkt (71) in ihrer Ausprägung verändert und insbesondere in Richtung einer geringeren Auslenkung (x) verschoben werden. Die in den Figuren 27 bis 29 dargestellten F-x-Diagramme zeigen beispielsweise, dass der sprunghafte Anstieg der Rückstellkraft (F) im Bereich des Druckpunktes (71) mit der Annäherung an das Hindernis (28) betragsmäßig vergrößert wird. Ebenso wird der Gradient (d/dx F) der Kraftüberhöhung (66) mit der Annäherung des Fahrzeugs (1) an das Hindernis (28) steiler. Die Veränderung von Ausprägung und/oder Position von Kraftüberhöhung (66) und/oder Druckpunkt (71) über der Auslenkung (x,µ) erfolgt bevorzugt derart, dass sie für die Bedienperson (30) fühlbar ist. Sie kann insbesondere derart wahrgenommen werden, dass sich die gefühlte Begrenzung für die Beweglichkeit des Griffteils (15) bei der Annäherung des Fahrzeugs (1) an ein Hindernis (28) in Richtung einer immer kleiner werdenden Auslenkung (x,µ) verschiebt.

Eine solche Veränderung des Kraftverlaufs für die Rückstellkraft (F) kann als Vorgabe für eine kontrollierte und sichere Annäherungsbewegung des Fahrzeugs (1) an ein Hindernis (28) dienen. Die Bedienperson (30) kann das Griffteil (15) beispielsweise nur bis zum Erreichen der Kraftüberhöhung (66) bzw. des Druckpunktes (71) auslenken und sodann das Griffteil (15) in Anlehnung an den gefühlten Druckpunkt (71) zu einer immer geringeren Auslenkung des Griffteils (15) führen lassen. Hierbei kann sich das Fahrzeug (1) zunächst mit relativ großer Geschwindigkeit an das Hindernis (28) annähern, wobei die Geschwindigkeit bei weiterer Annäherung sinkt. Bei Erreichen eines vorgegebenen und ggf. einstellbaren Mindestabstands (d_min) zwischen Fahrzeug (1) und dem Hindernis (28) kann beispielsweise ein im Wesentlichen sehr ausgeprägter Druckpunkt (71) bereits bei einer sehr geringen Auslenkung des Griffteils (15) erzeugt sein. Auf diese Weise kann der Bedienperson (30) vermittelt werden, dass eine weitere Annäherung an das Hindernis (28) nicht ratsam ist und die Gefahr einer Kollision besteht. Für die Bedienperson (30) kann dies bevorzugt derart wahrnehmbar sein, dass die Beweglichkeit des Griffteils (15) in Richtung des besagten Hindernisses (28) im Wesentlichen auf Null begrenzt ist.

Für die Bewegung des Fahrzeugs (1) gemäß der Darstellung in Figuren 16 und 17 bedeutet dies, dass der hinter dem Fahrzeug (1) bestehende Bewegungsraum für die Bedienperson (30) dadurch wahrnehmbar ist, dass sich das Griffteil (15) in diese Richtung bei anfänglich relativ geringem Widerstand leichtgängig und weit auslenken lässt. Hingegen kann eine Rotation (17) des Griffteils (15) durch entsprechende Kraftüberhöhungen (66) und/oder Druckpunkte (71) auf nur sehr kleine rotatorische Auslenkungen begrenzt sein. Die Bedienperson (30) kann hierdurch den haptisch vermittelten Eindruck gewinnen, dass sich das Fahrzeug (1) in Richtung eines noch großen Abstands (d) zu einem Hindernis (28) bereitwillig steuern lässt, den Bewegungsraum einschränkenden Hindernissen (28) jedoch ausweicht. Auf diese Weise wird erreicht, dass sich das Fahrzeug (1) in kontrollierter Weise bis zum Erreichen der Mindestabstände (d_min) zwischen den Hindernissen (28) und dem Fahrzeug (1) bewegen lässt und dann zum Stillstand kommt.

Sollte die Bedienperson (30) der Meinung sein, dass eine fehlerhafte Vorgabe einer Kraftüberhöhung (66) und/oder eines Druckpunktes (71) vorliegt, kann sie jederzeit durch ein Überschreiten der gefühlten Begrenzung der Beweglichkeit des Griffteils (15) eine stärkere Auslenkung des Griffteils (15) erzwingen. Die Bedienperson (30) kann also die Vorgaben für die Bewegung des Fahrzeugs (1) ignorieren und/oder absichtlich übergehen. Die Bedienperson (30) kann auf diese Weise zwar von einer Fernsteuerung (10) beim Rangieren unterstützt werden und ggf. Vorgaben erhalten, andererseits behält sie jedoch die Möglichkeit zur absichtlichen Übertretung der Vorgabe und somit zur vollumfänglichen Ausschöpfung der möglichen Bedienhandlungen.

Das bezeichnete Verfahren zur Unterstützung einer ferngesteuerten Annäherungsfahrt eines Fahrzeugs (1) an ein Hindernis (28) stellt eine Teilautomatisierung dar, bei der die Bedienperson (30) stets die aktive Kontrolle über die Fahrzeugsteuerung ausführt. Die Bedienperson wird durch die Teilautomatisierung vorschlagsweise zu einer günstigen Rangier- oder Annäherungsbewegung für das Fahrzeug (1) angeleitet. Die Fernsteuerung ersetzt aber nicht das Steuerverhalten der Bedienperson (30), sondern wirkt mit diesem zusammen. Die Bedienperson (30) bleibt also stets als aktives Glied im Regelkreis und gibt zu keinem Zeitpunkt die Verantwortung für die Steuerung ab.

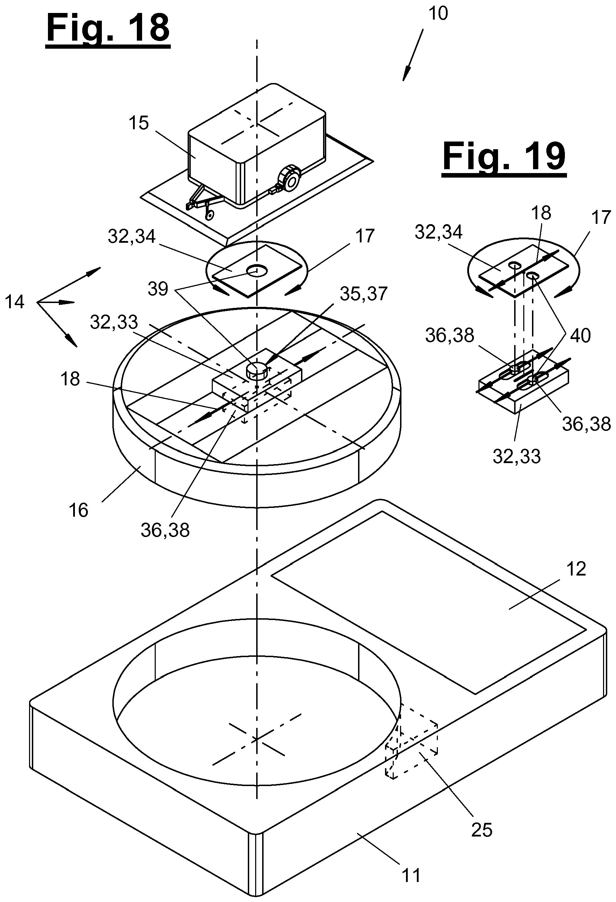

Figur 18 zeigt den Aufbau einer bevorzugten Ausführungsform der Fernbedienung (10) in Explosionsdarstellung. Das Eingabegerät (14) weist ein Basisteil (16) auf, welches unter dem Griffteil (15) angeordnet ist. Das Basisteil (16) ist im Gehäuse (11) der Fernbedienung (10) drehbar gelagert und über einen Stellmechanismus (25) rotierbar. Auf dem Basisteil (16) kann eine optische Anzeigeeinrichtung, wie bspw. ein Display, oder ein LED-Raster angeordnet sein, mittels dessen detektierte Hindernisse und der noch bleibende Freiraum um das Fahrzeug (1) visuell angezeigt werden können. Es kann auch eine akustische Rückmeldung erfolgen.

Das Eingabegerät (14) kann beliebig aufgebaut sein. In einer bevorzugten Ausführungsform weist es eine Mechanik (32) mit einem Steuerelementträger (33) und einem Adapterelement (34) auf. Am Steuerelementträger (33) sind ein rotatorisches Steuerelement (35) und ein translatorisches Steuerelement (36) angeordnet. Das Griffteil (15) ist über das Adapterelement (34) mittels einer Zapfen-Aufnahme-Verbindung (39) mit dem Steuerelementträger (33) verbunden. Eine Rotation (17) des Griffteils (15) kann über die Zapfen-Aufnahme-Verbindung (39) auf ein rotatorisches Steuerelement (35) übertragen werden. Eine Translation (18) des Griffteils (15) kann auf ein translatorisches Steuerelement (36) übertragen werden. An den Steuerelementen (35,36) werden bei einer Bewegung des Griffteils (15) Auslenkungen hervorgerufen, über die bevorzugt Steuersignale (49) erzeugt werden. In der genannten Ausführungsform können durch die Rotation (17) und die Translation (18) des Griffteils (15) zwei separate Steuersignale (49) für Rotation und Translation erzeugt werden. Diese Steuersignale können einzeln oder gemeinsam an die Rangiervorrichtung (68) übertragen und dort oder bereits in der Fernsteuerung (10) in geeignete Motorsteuersignale für die Antriebseinheiten (3) umgesetzt werden. Bei der Umsetzung kann ggf. eine geometrische Umrechnung von Rotationssignal und Translationssignal in geeignete Drehbewegungen der Räder (2) erfolgen.

Figur 19 zeigt eine alternative Ausführungsform der Mechanik (14) mit einem anderen Adapterelement (34) und einem anderen Steuerelementträger (33). An dem Steuerelementträger (33) sind zwei translatorische Steuerelemente (36) angeordnet. Das Griffteil (15) (nicht dargestellt) ist mittels des Adapterelements (34) über eine Kulissenführung (40), mit den beiden translatorischen Steuerelementen (36) verbunden. Bei dieser Ausführungsform werden eine Rotation (17) und eine Translation (18) des Griffteils (15) durch die Kulissenführung (40) einander überlagert und in zwei translatorische Auslenkungen der Steuerelemente (36) übersetzt. Bei einer reinen Rotation (17) des Griffteils (15) können beispielsweise an den beiden translatorischen Steuerelementen (36) betragsmäßig gleich große, jedoch in unterschiedlicher Richtung auftretende Auslenkungen erzeugt werden. Bei einer reinen Translation (18) des Griffteils (15) können zwei betragsmäßig gleich große und in gleicher Richtung auftretende Auslenkungen erzeugt werden. Kombinationen von Rotation (17) und Translation (18) des Griffteils (15) können in entsprechend unterschiedliche Auslenkungen an den translatorischen Steuerelementen (36) umgesetzt werden. Bei dieser Ausführungsform können an den Steuerelementen (36) zwei translatorische Steuersignale (49) erzeugt werden. Diese Steuersignale (49) können wiederum einzeln oder gemeinsam an die Rangiervorrichtung (68) übertragen und dort in geeignete Drehbewegungen für die Räder (2) umgesetzt werden.

Der Aufbau der Mechanik (14) in der genannten zweiten Ausführungsform mit der Kulissenführung (40) kann im Wesentlichen die Freiheitsgrade der Beweglichkeit eines Anhängers (1) oder eines ähnlichen Fahrzeugs mit seitlichen Rädern (2) direkt und im Wesentlichen geometrisch kongruent abbilden. Durch eine derartige Mechanik (14) kann es insbesondere möglich sein, dass die Steuersignale (49) für die Bewegung eines Fahrzeugs (1) derart aufgenommen werden, dass das Steuersignal des einen Steuerelements (36) direkt an die sinngemäß entsprechende Antriebseinheit (3) und das Steuersignal des anderen Steuerelements (36) an die andere Antriebseinheit (3) übertragbar sind. In diesem Fall kann auf eine rechnerische Verknüpfung von Translations- und Rotationsanteil zu einer sich ergebenden Kurvenbahn ggf. verzichtet werden. Ebenso können in den Antriebseinheiten (3) über die Messeinrichtungen (69) erfasste Antriebsreaktionen ggf. direkt, also ohne geometrische Umrechnung, für eine Beeinflussung der Rückstellkräfte (F) an den Steuerelementen (36) benutzt werden. Auf diese Weise kann der steuerungstechnische Aufwand erheblich reduziert werden.

Ferner sind beliebige andere Formen für eine Mechanik (14) möglich, welche eine andere Übersetzung der möglichen Bewegungen des Griffteils (15) auf beliebige Steuerelemente (35,36) ermöglichen. Es ist insbesondere auch möglich, dass ein einzelnes Steuerelement zur gemeinsamen Aufnahme von Rotation (17) und Translation (18) des Griffteils (15) ausgebildet ist.

Die rotatorischen und translatorischen Steuerelemente (35,36) der vorbezeichneten Art können eine beliebige Ausbildung haben. Sie können bevorzugt als aktive Steuerelemente (59) ausgebildet sein und eine gezielte Beeinflussung des Kraftverlaufs der Rückstellkräfte (F) über einer Auslenkung (x, µ) am aktiven Steuerelement (35,36,59) ermöglichen. Die Erzeugung und Beeinflussung der Rückstellkräfte (F) kann auf beliebige Weise erfolgen.

In Figur 25 ist eine bevorzugte Ausführungsform für ein aktives Steuerelement (59) schematisch dargestellt. Das aktive Steuerelement (59) weist ein Stellteil (60) auf, das aus einer Mittenposition in einer ersten Richtung (x) oder in einer dazu entgegengesetzten Richtung (x') ausgelenkt werden kann. In Figur 25 ist das Stellteil (60) in der Mittenposition dargestellt und über ein Lager (61) verschieblich angeordnet.

Das aktive Steuerelement (59) kann für jede Auslenkungsrichtung (x,x') ein, zwei oder mehrere Rückstellelemente (37,38,38',38") aufweisen. Je nach Ausbildung des aktiven Steuerelements (59) als rotatorisches Steuerelement (35) oder translatorisches Steuerelement (36) können die Rückstellelemente (37,38,38',38") entsprechend rotatorisch und/oder translatorisch ausgebildet sein. Auch eine Kombination ist möglich.

In Figur 25 sind beispielhaft für eine Auslenkung des Stellteils (60) in Auslenkungsrichtung (x) ein Rückstellelement (38) und in der dazu entgegen gesetzten Auslenkungsrichtung (x') zwei separate Rückstellelemente (38',38") angeordnet. Die Zahl und Anordnung der Rückstellelemente (38,38',38") dient rein zur Verdeutlichung der möglichen Variationen. Bei einem tatsächlichen Steuerelement können für die jeweiligen Auslenkungsrichtungen gleich oder unterschiedlich viele Rückstellelemente (38,38',38") angeordnet sein. Insbesondere können für jede Auslenkungsrichtung (x, x') zwei Rückstellelemente (38,38',38") angeordnet sein.

Die Rückstellelemente (38,38',38") können jeweils einen elastischen Kraftgeber (63,63',63"), wie beispielsweise eine Feder, eine Anlagefläche (64,64',64") und ggf. eine Vorspanneinrichtung (62,62',62") aufweisen.

Ein oder mehrere Rückstellelemente (38,38',38") können auch ein Rückhalteelement (65) aufweisen, das beispielsweise über ein Stellelement (62"') in seiner Position veränderbar ist. Das Rückhalteelement (65) kann den Eingriff eines Rückstellelements (38,38',38") mit einem Stellteil (60) erst ab einer bestimmten, ggf. veränderlichen Auslenkung (x,x') erfolgen lassen. Beispielsweise kann das Stellteil (60) des in Figur 25 dargestellten aktiven Steuerelements (59) derart in Auslenkungsrichtung (x') nach links bewegt werden, dass zuerst nur das obere Rückstellelement (38') mit dem Stellteil (60) in Eingriff kommt. Der Eingriff kann beispielsweise dadurch hergestellt werden, dass das Stellteil (60) mit der Anlagenfläche (64') in Berührung kommt und diese bei einer Bewegung mitnimmt, wobei die Feder (63') komprimiert wird. Durch die Kompression der Feder (63') kann eine erste Rückstellkraft (F_1') erzeugt werden, die der Auslenkung des Stellteils (60) entgegen wirkt.

Bei noch weiterer Auslenkung des Stellteils (60) in Richtung (x') kommt dieses zusätzlich in Eingriff mit dem zweiten Rückstellelement (38"). Sobald Kontakt zwischen dem Stellteil (60) und der Anlagefläche (64") des zweiten Rückstellelements (38") besteht, wird auch diese Anlagefläche (64") mitgenommen, wodurch auch die Feder (63") des zweiten Rückstellelements (38") komprimiert wird. Hierdurch muss zusätzlich zu der vorgenannten Rückstellkraft (F_1') des ersten Rückstellelements (38') auch die Rückstellkraft (F_2') des zweiten Rückstellelements (38") überwunden werden.

Die Federn (63,63',63") der Rückstellelemente (38,38',38") können jeweils auch durch eine Vorspanneinrichtung (62,62',62") komprimiert oder entspannt werden. Dies führt zu einer Veränderung der Grunddehnung der jeweiligen Feder (63,63',63"), wodurch der jeweilige Gradient der Federkraft (d/dx F_1, d/dx F_1', d/dx F_2') verändert werden kann. Der Gradient der Federkraft (d/dx F_1, d/dx F_1', d/dx F_2') kann erhöht oder verringert werden, wodurch der Kraftverlauf der Rückstellkraft (F) proportional steiler oder flacher eingestellt werden kann. Zur Verdeutlichung ist in Abbildung 25 auf der rechten Seite des Stellelements (60) ein Rückstellelement (38) mit einer durch die Vorspanneinrichtung (62) komprimierten Feder (63) dargestellt.

Der durch die Rückstellelemente (38,38',38") an dem in Figur 25 gezeigten aktiven Steuerelement (59) erzeugte Kraftverlauf für die Rückstellkräfte (F) ist in Figur 24 dargestellt. Hierbei stellen die durchgezogenen Linien im ersten und im dritten Quadranten jeweils die Kraftverläufe (72,74) für eine Auslenkung des Stellelements (60) nach rechts in Auslenkungsrichtung (x) oder nach links in Auslenkungsrichtung (x') dar, wobei die entsprechenden Rückstellkräfte (F_1,F_1',F_2') am Stellelement (60) angreifen können.

Eine Auslenkung des Stellelements (60) in Richtung (x) führt zu einer Mitnahme der Anlagefläche (64) des Rückstellelements (38).

Hierbei wird die Feder (63) komprimiert. Die Feder (63) ist allerdings in der in Figur 25 gezeigten Einstellung bereits durch die

Stelleinrichtung (62) vorkomprimiert. Daraus ergibt sich eine Erhöhung des Gradienten (d/dx F_1). Der Kraftverlauf im ersten Quadranten des F-x-Diagrammes von Figur 24 ist entsprechend steiler ausgeprägt.

Bei einem Auslenken des Stellelements (60) nach links in Richtung (x') liegt zuerst nur das Rückstellelement (38') an dem Stellelement (60) an, wobei die Kraft (F_1') mit dem Gradienten (d/dx F_1') am Stellelement (60) angreift. Die Feder (63') ist in der gezeigten Anordnung nicht vorkomprimiert, weshalb der Gradient (d/dx F_1') der Rückstellkraft (F_1') verhältnismäßig kleiner ist. Entsprechend ist der zugehörige Kraftverlauf im dritten Quadranten bei geringer Auslenkung in Richtung (x') flacher ausgeprägt als der Kraftverlauf im ersten Quadranten.

Wird das Stellteil (60) weiter in Richtung (x') ausgelenkt, so kommt es auch zur Mitnahme der zweiten Anlagefläche (64"). Hierbei tritt ggf. sprungartig die zusätzliche Rückstellkraft (F_2') im Kraftverlauf auf. Hierdurch wird ein sprunghafter Anstieg im Kraftverlauf erzeugt, der im Weiteren als Druckpunkt (71) bezeichnet wird. Ein solcher Druckpunkt kann durch eine Bedienperson (30) als Begrenzung der Bewegung des Stellteils (60) und eines ggf. damit verbundenen Griffteils (15) wahrgenommen werden.

Die fühlbare Rückstellkraft (F) kann sich im Wesentlichen durch Superposition aus den einzelnen Rückstellkräften (F_i) der jeweiligen Rückstellelemente (38,38',38") zusammensetzen. Wird die in einem Druckpunkt (71) oder einer Kraftüberhöhung (66) gefühlte Begrenzung der Bewegung des Stellteils (60) durch eine zusätzliche Auslenkung überwunden, so greifen die Rückstellkräfte (F_i) einander überlagernd und ggf. unter Aufsummierung der Gradienten (d/dx F_i) am Stellelement (60) an.

Eine Auslenkung des Stellteils (60) aus der Mittenposition in Auslenkungsrichtung (x') ist für eine Bedienperson (30) beispielsweise derart spürbar, dass zuerst eine als leichtgängig empfundene Auslenkung möglich ist, worauf ein Druckpunkt (71) erreicht wird, der gefühlsmäßig als Begrenzung der Beweglichkeit des Stellelements (60) wahrgenommen wird. Dieser Druckpunkt (71) kann durch weitere Kraftaufwendung überwunden werden, wobei die weitere Auslenkung nun schwergängiger empfunden wird.

Das Auftreten einer Kraftüberhöhung (66) und/oder eines Druckpunktes (71) sowie deren Ausprägung können über eine geeignete Kombination der Kompression der Federn (63) und eine Verschiebung der jeweiligen Rückhalteelemente (65) eingestellt werden.

Neben der gezeigten Ausführungsform für ein aktives Steuerelement (59) sind beliebige andere Ausführungsformen möglich. Die Rückstellkräfte (F) können beispielsweise nicht oder nicht nur über Federn, sondern auch über Druckzylinder, elektrische Felder, magnetische Felder oder in beliebig anderer Weise aufgebracht werden. Auf Anlageflächen (64,64',64") und/oder Stelleinrichtungen (62,62',62") kann je nach Ausführungsform ggf. verzichtet werden.

Die Beeinflussung des Kraftverlaufs (F) über der Auslenkung (x,µ) kann über mechanische Komponenten, wie beispielsweise die gezeigten Rückstellelemente (38), oder über beliebige andere und beispielsweise elektrische, Komponenten erfolgen. Bei einer elektromagnetischen Erzeugung der Rückstellkräfte (F) kann eine entsprechende Beeinflussung der Kraftverläufe beispielsweise über Einstellung der Erregerströme für ein Magnetfeld erfolgen. Weitere physikalische Effekte und deren Umsetzbarkeit zur Erzeugung von geeigneten Kraftverläufen stehen im Bereich des fachmännischen Könnens.

In den stetigen Bereichen des Kraftverlaufs (F) kann eine lineare Beziehung zwischen Rückstellkraft (F) und Auslenkung (x,µ) bestehen. Es kann alternativ auch ein in sonstiger Weise ausgeprägter und beispielsweise leicht gekrümmter Kraftverlauf bestehen, der sich bevorzugt an der Stelle des Auftretens einer Kraftüberhöhung (66) und/oder eines Druckpunktes (71) merklich von dem Verlauf des daran anschließenden Bereichs abhebt. Ferner ist es möglich, einen Kraftverlauf zu erzeugen, der nur eine lokale Kraftüberhöhung oder einen lokalen Rastpunkt (76) aufweist, bei dessen Überschreitung jedoch wiederum die relativ geringe Rückstellkraft mit gleichem Gradienten auftritt. Ein solcher Rastpunkt (76) kann sich beispielsweise ähnlich einem Kick-Down bei einem Auto mit Automatikgetriebe anfühlen. Die gezeigten Kraftverläufe können für translatorische, rotatorische oder kombinierte Auslenkungen und ggf. richtungsabhängig erzeugt werden.

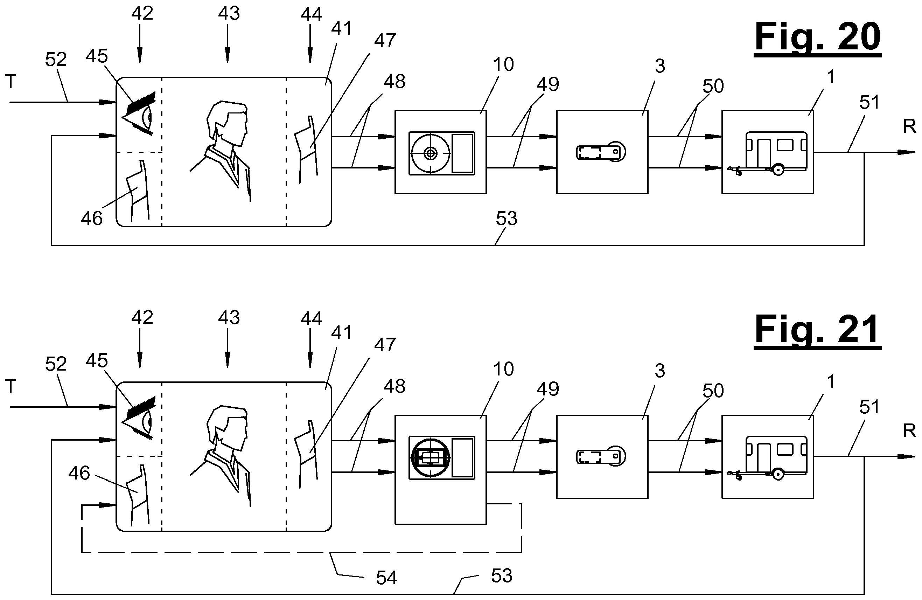

In den Figuren 20 bis 24 sind Informationsflussdiagramme für die Fernsteuerung eines Rangiervorgangs dargestellt, die der Darstellung von Regelkreisen ähneln. Die Diagramme können in ähnlicher Weise gelesen werden. Eckige Kästen stellen Teile des Rangiersystems als technische Komponenten dar, nämlich eine Fernbedienung (10), Antriebseinheiten (3) und ein Fahrzeug (1). Der Kasten mit den abgerundeten Ecken stellt ein Modell eines Menschen (41), bspw. der Bedienperson (30) dar. Das Modell eines Menschen (41) wird dabei in drei Bereiche unterteilt, nämlich in Informationsaufnahme (42), Informationsverarbeitung (43) und Informationsumsetzung (44).

Im Bereich der Informationsaufnahme (42) ist modelliert, dass ein Mensch (41) mittels seiner Sinnesorgane Informationen aus seiner Umgebung wahrnehmen kann. Im vorliegenden Fall geschieht dies insbesondere über die visuelle Wahrnehmung (45), also das Sehen sowie über die Haptik (46), also das Fühlen und insbesondere das Fühlen an den Händen. Außerdem kann ein Mensch (41) auch Informationen über das Hören, das Riechen oder die kinästhetische Wahrnehmung aufnehmen, was in den Figuren 20 bis 23 aus Gründen der Übersichtlichkeit jedoch nicht dargestellt ist.

Im Bereich der Informationsverarbeitung (43) ist eine gedankliche Beschäftigung des Menschen (41) mit dem von ihm zu lösenden Problem modelliert, wobei er Problemlösestrategien entwickelt, dabei ggf. gedankliche Modelle des zu steuernden Systems nutzt und Entscheidungen trifft.

Gemäß den getroffenen Entscheidungen ist im Bereich der Informationsumsetzung (44) eine Einwirkung des Menschen (41) auf ein Bedienelement (10) modelliert, wobei der Mensch (41) bestimmte Bedienhandlungen vornehmen und Bedieninformationen (48) an der Fernbedienung (10) eingeben kann. Hierfür nutzt der Mensch (41) im vorliegenden Beispiel insbesondere seine Hände (47).

Das Rangieren eines Fahrzeugs (1) stellt sich für eine Bedienperson (30,41) beispielsweise als Aufgabe (T) dar. Die Aufgabe (T) kann unterschiedlich definiert sein und hängt stark von den jeweiligen Umgebungsbedingungen ab. Im vorliegenden Fall kann die Aufgabe (T) im Sinne der Vorgabe einer Sollposition (52) für das Fahrzeug (1) bestehen. Alternativ kann die Aufgabe (T) auch als Sollbewegung für ein Fahrzeug (1) aufgefasst werden.

Die Bedienperson (30,41) kann die Sollposition (52) des Fahrzeugs (1) visuell wahrnehmen und ggf. selbst wählen. Man vergleiche hierzu die Figuren 7 bis 17. Je nach Anwendung des Informationsflussmodells kann die Sollposition (52) beispielsweise die in einem einzelnen Rangierschritt zu erreichende Position am Ende eines Fahrtweges (31) sein. In Figuren 9 und 11 bis 17 könnte die Sollposition (52) beispielsweise die in durchgezogener Kontur der Fahrzeugs (1) dargestellte Position am Ende eines Rangierschrittes sein. Alternativ kann bei einer Anwendung des Informationsflussmodells auf den gesamten Rangiervorgang unter der Sollposition (52) auch die Zielposition (27) für das Fahrzeug (1) aufgefasst werden, also bspw. eine Parkposition oder eine Position zum Ankuppeln hinter einem Zugfahrzeug.

Die Bedienperson (30,41) versucht geeignete Bedienhandlungen zu ersinnen und auszuführen, sodass das Fahrzeug (1) tatsächlich zur Sollposition (52) bewegt wird.

Je nach Auffassung des Inhalts der momentanen Aufgabe (T) für die Bedienperson (30,41) kann eine unterschiedliche geistige Vorwegnahme des zu steuernden Systems notwendig sein. Für das Auffinden einer günstigen Reihenfolge von Fahrtwegen (31) für das Rangieren des Fahrzeugs (1) kann eine Bedienperson (30,41) eventuell nur die Umrisse bzw. die Größe des zu steuernden Fahrzeugs (1) und die im Umfeld befindlichen Hindernisse (28) als geistiges Modell abbilden, jedoch keine geistige Berücksichtigung von der Eingabelogik an einer Fernbedienung (10) oder den potenziellen Antriebsreaktionen an den Antriebseinheiten (3) vornehmen. Eine im Rangieren von Fahrzeugen (1) geübte Bedienperson (30,41) kann hierbei ggf. komplexere und günstigere geistige Modelle und Vorstellungen haben, über die bessere Strategien für eine Auffindung von Fahrtwegen (31) möglich sind, als eine ungeübte Bedienperson.

Für das Ausführen der Bedienhandlungen (48) zum Steuern eines Fahrzeugs (1) auf einem gewünschten Fahrtweg (31) kann eine Bedienperson (30,41) auch beispielsweise nur lokale Begebenheiten der Nahumgebung des Fahrzeugs (1) geistig verarbeiten, jedoch vergleichsweise höhere Konzentration auf eine Beschäftigung mit der Bedienlogik verwenden.

Es kann das Problem auftreten, dass sich im Rahmen einer ersten Strategieplanung gefundene Wunsch-Fahrtwege bei der Durchführung als ungünstig erweisen oder dass bei der Eingabe von Bedieninformationen (48) an der Fernbedienung (10) andere Bewegungen des Fahrzeugs (1) ausgeführt werden, als dies von der Bedienperson (30,41) beabsichtigt war, der sich tatsächlich ergebende Fahrtweg (31) also von einem Wunsch-Fahrtweg abweicht. Dies kann dazu führen, dass eine Bedienperson (30,41) eine erneute Strategieplanung betreiben und neue, günstige Wunsch-Fahrtwege auffinden muss.

Neben der Sollposition (52) für das Fahrzeug (1) kann eine Bedienperson (30,31) üblicherweise auch die momentane Ist-Position (51) des Fahrzeugs (1) visuell wahrnehmen. Im Bereich der Informationsverarbeitung (43) kann die Bedienperson (30,41) die wahrgenommene Ist-Position (51) berücksichtigen und im Rahmen eines regulativen Eingriffs weitere oder abgewandelte Strategien für einen oder mehrere günstige Fahrtwege (31) finden. Gemeinsames Ziel der Strategieplanung kann insbesondere sein, dass Fahrtwege (31) gefunden werden, auf denen das Fahrzeug (1) von seiner Ist-Positon (51) zur Sollposition (52) gesteuert wird, ohne mit Hindernissen (28) zu kollidieren.

Über die Hände (47) kann eine Bedienperson (30,41) Bedieninformationen (48) an einem Bedienelement (10) eingeben. Das Bedienelement (10) kann für die Anwendung der Informationsflussdiagramme grundsätzlich beliebig ausgeführt sein. In einem bevorzugten Fall handelt es sich dabei um eine Fernsteuerung (10), über welche Steuersignale (49) wie beispielsweise Motor- oder Antriebssteuersignale an eine oder mehrere Antriebseinheiten (3) einer Rangiervorrichtung (68) gesendet werden. Von den Antriebseinheiten (3) können daraufhin Antriebskräfte und/oder Antriebsmomente (50) erzeugt werden, die auf die Räder (2) des Fahrzeugs (1) einwirken. Durch die Drehung der Räder (2) kann eine Bewegung des Fahrzeugs (1) erzeugt werden, die zu einer entsprechenden Veränderung der Ist-Position (51) des Fahrzeugs (1) führt. Diese Bewegung bzw. die momentane Ist-Position (51) des Fahrzeugs (1) und deren tatsächliche Veränderung können das der Aufgabe (T) entsprechende Ergebnis (R) darstellen. Das Ergebnis (R) ist als Rückmeldung (53) der Bewegung bzw. der Position des Fahrzeugs (1) für die Bedienperson (30,41) dargestellt. Die Rückmeldung (53) ist für die Bedienperson (30,41) im Wesentlichen visuell wahrnehmbar.

Das in Figur 20 dargestellte Informationsflussdiagramm behandelt den Fall des ferngesteuerten Rangierens eines Fahrzeugs (1) mit einer beliebig ausgeführten Fernbedienung (10). Die Fernbedienung (10) kann in diesem Fall auch nicht erfindungsgemäß ausgebildet sein. In Figur 20 ist somit ein hypothetischer Basisfall dargestellt, der durch Hinzunahme offenbarungsgemäßer Merkmale in den Figuren 21 bis 23 weitergebildet wird. Er dient lediglich zur Verdeutlichung von möglichen Unterschieden.

In dem in Figur 20 dargestellten Basisfall muss eine Bedienperson (30,41) zur Ermittlung günstiger Strategien für das gesteuerte Rangieren des Fahrzeugs (1) und für eine fehlerfreie Umsetzung ihrer Strategien in entsprechende Bedieninformationen (48) das verkettete System von Bedienelement (10), Antriebseinheiten (3) und zu steuerndem Fahrzeug (1) gedanklich vorwegnehmen. Dies geschieht im Wesentlichen über eine geistige Modellbildung und ein geistiges Operieren mit dem Modell in der Vorstellung der Bedienperson (30,41). Sie versucht sich vorzustellen, wie sich eine bestimmte Bedienhandlung am Bedienelement (10) in einer tatsächlichen Bewegung des Fahrzeugs (1) auswirken wird und probiert dabei ggf. unterschiedliche Bedienhandlungen in der geistigen Vorwegnahme aus, bis sie eine günstige oder mehrere ggf. verkettete Bewegungen und somit einen Wunsch-Fahrtweg geplant hat.

Eine Bedienperson (30,41) muss ggf. solche Umsetzungen des Informationsgehalts geistig vorwegnehmen, die bei der Weiterleitung von Einzelinformationen zwischen der Bedienperson (30,41) zum Bedienelement (10), von dem Bedienelement (10) zu den Antriebseinheiten (3) sowie von den Antriebseinheiten (3) zur Bewegung des Fahrzeugs (1) auftreten können. Hierzu können insbesondere Umsetzungen im Bereich der Eingabelogik bestehen. Verfügt eine Fernbedienung (10) beispielsweise über ein Eingabegerät in Form von zwei Bedienhebeln, bei dem der eine Hebel zur Eingabe einer Translation und der andere zur Eingabe einer Rotation vorgesehen ist, so kann eine eigentlich zweidimensionale Bewegung des Fahrzeugs nur durch zwei eindimensionale Bewegungen von zwei separaten Hebeln geschehen. Eine Bedienperson (30,41) müsste in einem solchen Fall also erst erlernen wie die Bewegungen der Hebel aufeinander abgestimmt werden müssen, um eine wunschgemäße Kurvenfahrt zu erzeugen. Weiterhin kann eine Umsetzung des Informationsgehaltes in der zuvor beschriebenen Transformation von Richtungsbezügen bestehen.

Auch muss eine ungeübte Bedienperson (30,41) in dem hypothetischen Beispiel erst erlernen, wie sich am Bedienelement (10) getätigte Eingaben dynamisch auf die Antriebseinheiten (3) auswirken und welche tatsächlichen Bewegungen des Fahrzeugs (1) sich daraus ergeben. Es kann dabei möglich sein, dass das Fahrzeug (1) je nach Untergrund oder Hanglage sehr unterschiedlich reagiert. Für das Auffinden geeigneter und ausführbarer Fahrtwege für das ferngesteuerte Rangieren eines Fahrzeuges (1) ist also ein gutes Verständnis der Bedienlogik und der Informationsumsetzungen notwendig. Je mehr Informationsumsetzungen stattfinden, desto schwieriger gestaltet sich das Rangieren.

In den Figuren 21 bis 23 ist ein Verfahren zur Unterstützung des ferngesteuerten Rangierens von Fahrzeugen (1) aufgezeigt. Wie in Figur 21 dargestellt, kann durch eine geeignete Ausbildung einer offenbarungsgemäßen Fernbedienung (10) eine Rückmeldung (54) der Beweglichkeit oder Bewegungsmöglichkeit des Fahrzeugs (1) an eine Bedienperson (30,41) geschehen. Die Rückmeldung (54) der Bewegungsmöglichkeit des Fahrzeugs (1) kann bevorzugt dadurch geschehen, dass ein an der Fernbedienung (10) angeordnetes Eingabegerät (14) derart ausgebildet ist, dass es die Freiheitsgrade der Beweglichkeit des zu steuernden Fahrzeugs (1) abbildet. Hierdurch kann eine relative Gleichsinnigkeit zwischen einem Eingabegerät (14) und einem zu steuernden Fahrzeug (1) erzeugt werden. Eine Bedienperson (30,41) kann über die Rückmeldung (54) auf sofort verständliche und intuitive Weise die Bedienlogik der Fernbedienung (10) nachvollziehen und somit erkennen, wie sich eine Bewegung eines Griffteils (15) an der Fernbedienung (10) relativ in eine Bewegung des zu steuernden Fahrzeugs (1) umsetzen wird.

Insbesondere kann eine Rückmeldung (54) der Bewegungsmöglichkeit des Fahrzeugs (1) derart gestaltet sein, dass das Eingabegerät (14) an der Fernbedienung (10) eine Rotation und eine Translation sowie ggf. eine zweidimensional überlagerte Kurvenbewegung zulässt, welche sich aus einem Rotations- und einem Translationsanteil zusammensetzen kann.

Eine Rückmeldung (54) der Bewegungsmöglichkeit des Fahrzeugs (1) kann alternativ oder zusätzlich derart erfolgen, dass an der Fernbedienung (10) ein Griffteil (15) angeordnet ist, das eine drehbar veränderliche Grundposition (23) aufweist und dass die Orientierung der Grundposition (23) des Griffteils (20) während eines Rangiervorgangs der Orientierung (22) des zu steuernden Fahrzeugs (1) anpassbar und ggf. automatisch nachführbar ist. Hierdurch kann eine absolute Gleichsinnigkeit zwischen Eingabegerät (14) und zu steuerndem Fahrzeug (1) erreicht werden.

Durch eine Rückmeldung (54) der Beweglichkeit des Fahrzeugs (1) an eine Bedienperson (30,41) wird eine Informationsumsetzung im Sinne einer geistig vorweggenommenen Transformation zwischen den geometrischen Bezügen von Bedieninformationen (48) und Bewegung des Fahrzeugs (1) entbehrlich. Hierdurch wird das ferngesteuerte Rangieren vereinfacht.

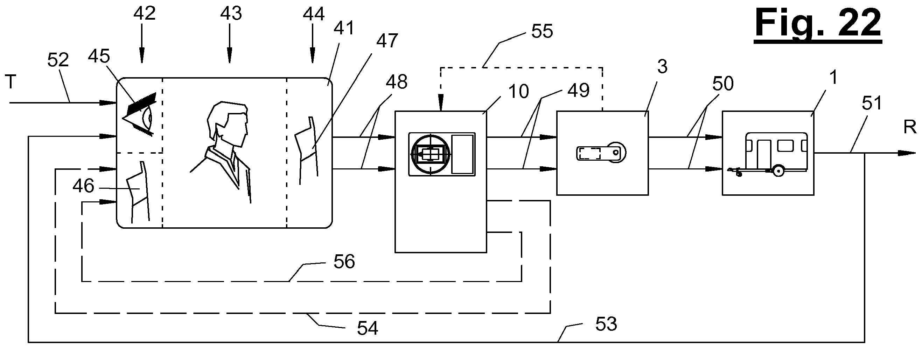

Wie in Figur 22 dargestellt, kann zur Unterstützung des ferngesteuerten Rangierens von Fahrzeugen (1) über eine offenbarungsgemäße Fernbedienung (10) eine Rückmeldung (56) der Bewegungsreaktionen am Fahrzeug (1) an eine Bedienperson (30,41) erfolgen. Eine oder mehrere Antriebseinheiten (3) einer offenbarungsgemäßen Rangiervorrichtung (68) können hierzu Informationen über Antriebsreaktionen (55) wie beispielsweise Antriebsmomente, Antriebsgeschwindigkeiten, Antriebsbeschleunigungen, Antriebskräfte oder Motorströme direkt oder in verarbeiteter Form an die Fernbedienung (10) übertragen.

Die Rückmeldung (56) der Antriebsreaktionen am Fahrzeug (1) kann bevorzugt über einen haptischen Sinneskanal erfolgen. Die Rückmeldung (56) kann insbesondere durch eine Veränderung von Rückstellkräften an einem Eingabegerät (14) der Fernbedienung (10) erfolgen. Die Veränderung der Rückstellkräfte kann hierbei bevorzugt durch eine proportionale Anhebung oder Absenkung der Rückstellkräfte erfolgen.

Durch die Rückmeldung der Antriebsreaktionen des Fahrzeugs (1) an die Bedienperson (30,41) kann eine schnellere und intuitivere Reaktion der Bedienperson (30,41) auf die Dynamik der Fahrbewegung eines ferngesteuerten Fahrzeugs (1) ermöglicht werden.

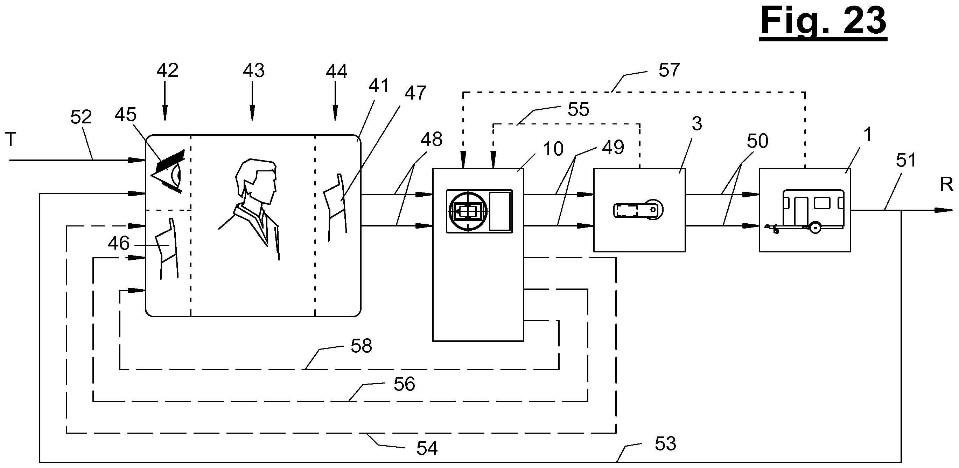

Wie in Figur 23 dargestellt, kann von einer Fernbedienung (10) aus eine Rückmeldung (58) des Bewegungsraums eines Fahrzeugs (1) an eine Bedienperson (30,41) erfolgen. Eine Rückmeldung des Bewegungsraums (58) kann beispielsweise haptisch erfolgen. Sie kann bevorzugt dadurch geschehen, dass Rückstellkräfte an einem Eingabegerät (14) der Fernbedienung (10) derart verändert werden, dass Kraftüberhöhungen (66) und/oder Druckpunkte (71) und/oder Rastpunkte im Kraftverlauf einer Rückstellkraft über einer Auslenkung eines Griffteils (15) erzeugt werden. Das Auftreten und die Ausprägung der Kraftüberhöhungen (66) und/oder der Druckpunkte (71) und/oder der Rastpunkte (76) können in Abhängigkeit vom Bewegungsraum des Fahrzeugs (1) veränderlich sein. Insbesondere können Informationen über den Bewegungsraum des Fahrzeugs (1) in Form von einem oder mehreren Abstandssignalen (57) an eine Fernbedienung (10) übertragbar sein. Die Veränderung der Kraftverläufe für die Rückstellkräfte kann derart erfolgen, dass hierdurch eine für die Bedienperson (30,41) fühlbare Vorgabe für eine kontrollierte und sichere Annäherungsbewegung des Fahrzeugs (1) an ein oder mehrere Hindernisse (28) erfolgen kann. Alternativ oder zusätzlich kann eine visuelle und/oder akustische Rückmeldung des Bewegungsraums erfolgen.

Bei einem offenbarten Verfahren zur Unterstützung des ferngesteuerten Rangierens von Fahrzeugen (1) kann nur eine Rückmeldung (54) der Bewegungsmöglichkeit des Fahrzeugs (1), nur eine Rückmeldung (56) der Antriebsreaktionen am Fahrzeug (1), nur eine Rückmeldung (58) des Bewegungsraums des Fahrzeugs (1) oder eine beliebige Kombination der genannten Rückmeldungen erfolgen. Die Rückmeldungen (54,56,58) können bevorzugt über den haptischen Sinneskanal (46) erfolgen. Alternativ oder zusätzlich können entsprechende Informationen für die Rückmeldungen (54,56,58) auch über akustische oder optische Anzeigen erfolgen. Eine parallele visuelle und/oder akustische Rückmeldung kann ein schnelles Verständnis des Informationsgehalts der haptischen Rückmeldung begünstigen und ist im Rahmen der Offenbarung vorgesehen.

Abwandlungen der gezeigten Ausführungsformen sind in verschiedener Weise möglich. Das Griffteil (15) kann im Bereich der nachempfundenen Deichsel einen zusätzlichen Angriffspunkt zur händischen Bewegung aufweisen. Hierüber kann eine Bedienperson (30) zum Feinrangieren beim Ankuppeln des Fahrzeugs (1) an ein Zugfahrzeug, wie bspw. einen PKW mit Kugelkopfkupplung, eine einfachere Steuerung des Fahrzeugs (1) ausführen. Bei einer Verschiebung des Angriffspunkts am Griffteil (15) wird eine Steuerbewegung an der Fernbedienung ermöglicht, die dem manuellen Verschieben der Zugdeichsel entspricht. Das Fahrzeug kann auch einen Hebe-/ Senkmechanismus (77) für die Deichsel und/oder die Kupplungspfanne des Fahrzeugs (1) aufweisen, der ebenfalls über die Fernbedienung (10) steuerbar ist, sodass ein voll fernsteuerbares An- und/oder Abkuppeln ermöglicht wird. Dies ist insbesondere bei schweren Anhängern günstig, die sonst nur mit großer Kraftanstrengung gekuppelt werden können. Das Bedienelement zum Ansteuern der Hebe-/Senkvorrichtung (77) kann mit dem Griffteil (15) kombiniert oder separat ausgeführt sein.

Eine Beeinflussung der Rückstellkräfte (F) an einem Eingabegerät (14) kann auch bei einer beliebig anderen Ausbildung des Griffteils (15) und der Mechanik (14) erfolgen. Insbesondere ist eine Beeinflussung der Rückstellkräfte auch möglich, wenn das Eingabegerät (14) in Form eines Hebels oder einem oder mehreren Schiebereglern besteht. Die Veränderung der Kraftverläufe für die Rückstellkräfte (F) kann auf andere Weise erfolgen und in Abhängigkeit von anderen Stellsignalen ausgeführt werden.

Zusätzlich zu den genannten Möglichkeiten für eine haptische Rückmeldung durch veränderte Kraftverläufe können weitere bestehen, wie etwa das Erzeugen von Vibrationen, das Verändern einer Oberflächenstruktur o.ä. Eine Fernbedienung (10) kann an beliebige andere Rangiervorrichtungen (68) mit ggf. anderen Antriebseinheiten (3) angepasst sein. Alle genannten Steuer- und Messsignale können in direkter Weiterleitung oder in ggf. elektronischer und/oder rechnerisch aufbearbeiteter Form übertragen werden. Die Fernbedienung (10) und die Rangiervorrichtung (68) können entsprechende hierfür ausgebildete Steuergeräte, Prozessoren, Schaltungen o.ä. aufweisen. Die gezeigten und/oder genannten Merkmale der verschiedenen Ausführungsformen können untereinander durch andere Merkmale ersetzt, weggelassen oder in beliebiger Weise kombiniert werden.

Die vorliegende Offenbarung weist mehrere eigenständige Aspekte auf, die jeweils separat oder in beliebiger Kombination ausführbar sind.

Eigenständigen Offenbarungscharakter hat auch eine Fernbedienung (10) für Fahrzeuge (1) mit einer Rangiervorrichtung (68), die eine Positionssteuerung für Fahrzeugteile aufweist.

Eigenständigen Offenbarungscharakter hat eine Fernbedienung (10) für Fahrzeuge (1), bei der die Grundposition (23) eines Griffteils (15) drehbar veränderlich ist.

Eigenständigen Offenbarungscharakter hat eine Fernbedienung (10), die dazu ausgebildet ist, bei einer Veränderung der Orientierung (22) des Fahrzeugs (1) die Grundposition (23) eines Griffteils (15) nachzuführen.

Neben den dargestellten Ausführungsbeispielen sind auch andere günstige Merkmalskombinationen möglich, die jeweils eigenständige Lösungen darstellen. So kann es insbesondere vorteilhaft sein, bei einer Fernbedienung (10) mit beliebiger Beweglichkeit eines Griffteils (15) das Griffteil (15) in Nachbildung eines zu steuernden Fahrzeugs (1) auszuführen. Ebenso ist es eigenständig vorteilhaft, an einer Fernbedienung (1) die Grundposition (23) eines Griffteils (15) drehbar veränderlich zu gestalten, wobei insbesondere bei einer Veränderung der Orientierung (22) des zu steuernden Fahrzeugs (1) die Grundposition (23) am Griffteil (15) nachführbar ist. Eine solche Drehveränderlichkeit eines Griffteils (15) kann insbesondere auch bei anderen zweidimensionalen Eingabegeräten (14) oder auch bei Eingaberäten (14) mit ein oder zwei eindimensionalen Beweglichkeiten anwendbar und günstig sein.

Auch eine Fernbedienung (10) zur Steuerung von Fahrzeugen(1) mit einer Rangiervorrichtung (68), die eine Positionssteuerung für Fahrzeugteile aufweist, hat eigenständigen Erfindungswert. Eine Positionssteuerung kann auch unabhängig von der Beweglichkeit und/oder Dimensionalität eines Eingabegerätes (14) vorteilhaft einsetzbar sein.

Es ist auch eigenständig vorteilhaft, ein Rangiersystem (70) für Fahrzeuge (1), insbesondere für Anhänger, mit einer Fernbedienung (10) auszubilden, bei dem die Sensitivität, mit der das Fahrzeug (1) auf eine Auslenkung (x,µ) an einem Eingabegerät (14) reagiert, einstellbar und ggf. veränderlich ist. Insbesondere kann eine Einstellung und/oder Veränderung der Sensitivität in Abhängigkeit von einer Fahr- und/oder Bedien- und/oder Umgebungssituation erfolgen. Eine Einstellung und/oder Veränderung der Sensitivität kann beispielsweise in Abhängigkeit von Informationen (57) über erfasste Umgebungsbedingungen und/oder in Abhängigkeit von Informationen (55) über Antriebsreaktionen am Fahrzeug, insbesondere an einem oder mehreren Hilfsfahrantrieben erfolgen.

Eigenständig offenbart ist eine Fernbedienung zur Steuerung von Fahrzeugen (1) mit einer Rangiervorrichtung (68), wobei die Fernbedienung (10) ein Eingabegerät (14) aufweist und das Eingabegerät (14) eine Rotation (17) eines Griffteils (15) in Bezug auf eine Grundposition (23) ermöglicht.

Eigenständig offenbart ist eine Fernbedienung zur Steuerung von Fahrzeugen (1) mit einer Rangiervorrichtung (68), wobei die Fernbedienung (10) ein Eingabegerät (14) aufweist und das Eingabegerät eine Translation (18) des Griffteils (15) in Bezug auf eine Grundposition (23) ermöglicht.

Eigenständig offenbart ist eine Fernbedienung zur Steuerung von Fahrzeugen (1) mit einer Rangiervorrichtung (68), wobei die Fernbedienung (10) ein Eingabegerät (14) aufweist und das Eingabegerät (14) mit einem Basisteil (16) im Gehäuse (11) der Fernbedienung (10) drehbar gelagert ist.

Eigenständig offenbart ist auch ein Rangiersystem (70) mit einer Fernbedienung (10) und einer Rangiervorrichtung (68) für Fahrzeuge (1), die mindestens einen zeitweise oder dauerhaft an beiden Seiten des Fahrzeugs (1) Räder (2) antreibenden Hilfsfahrantrieb aufweist, wobei eine, mehrere oder alle vorhandenen Antriebseinheiten (3) eine Messeinrichtung (69) zur Messung von Antriebsreaktionen (55) aufweisen.

Eigenständig offenbart ist auch ein Rangiersystem (70) mit einer Fernbedienung (10) und einer Rangiervorrichtung (68) für Fahrzeuge (1), die mindestens einen zeitweise oder dauerhaft an beiden Seiten des Fahrzeugs (1) Räder (2) antreibenden Hilfsfahrantrieb aufweist, wobei die Rangiervorrichtung (68) technische Mittel aufweist, eine Veränderung der Orientierung (22) des Fahrzeugs (1) festzustellen.

Eigenständig offenbart ist auch ein Rangiersystem (70) mit einer Fernbedienung (10) und einer Rangiervorrichtung (68) für Fahrzeuge (1), die mindestens einen zeitweise oder dauerhaft an beiden Seiten des Fahrzeugs (1) Räder (2) antreibenden Hilfsfahrantrieb aufweist, wobei die Rangiervorrichtung (68) einen elektronischen Kompass aufweist.

Eigenständig offenbart ist auch ein Rangiersystem (70) mit einer Fernbedienung (10) und einer Rangiervorrichtung (68) für Fahrzeuge (1), die mindestens einen zeitweise oder dauerhaft an beiden Seiten des Fahrzeugs (1) Räder (2) antreibenden Hilfsfahrantrieb aufweist, wobei eine Messeinrichtung (69) dazu ausgebildet ist, die Drehgeschwindigkeit eines durch eine Antriebseinheit (3) angetriebenen Rads (2) zu erfassen.

### BEZUGSZEICHENLISTE

- 1: Fahrzeug / Anhänger
- 2: Rad
- 3: Antriebseinheit / Rangierantrieb / Hilfsfahrantrieb
- 4: Stützrad
- 5: Datenübertragungseinrichtung / Sende- und Empfangseinrichtung
- 6: Energieversorgung / Batterie
- 7: Steuerung
- 8: Leitung
- 9: Rahmen / Fahrgestell
- 10: Fernbedienung
- 11: Gehäuse
- 12: Tastenfeld
- 13: Display
- 14: Eingabegerät
- 15: Griffteil / Bedienknopf
- 16: Basisteil
- 17: Rotation des Griffteils um Hochachse
- 18: Translation des Griffteils auf Längsachse
- 19: Rotation des Basisteils um Hochachse
- 20: Orientierung des Griffteils
- 21: Orientierung des Basisteils
- 22: Orientierung des Anhängers
- 23: Grundposition des Griffteils
- 24: Ausgelenkte Position des Griffteils
- 25: Stellmechanismus für Basisteil
- 26: Momentane Position des Anhängers
- 27: Zielposition des Anhängers
- 28: Hindernis
- 29: Bodenunebenheit
- 30: Bedienperson
- 31: Fahrtweg
- 32: Mechanik d. Eingabegeräts
- 33: Steuerelementträger
- 34: Adapterelement
- 35: rotatorisches Steuerelement
- 36: translatorisches Steuerelement
- 37: Rotatorisches Rückstellelement
- 38: Translatorisches Rückstellelement
- 39: Zapfen-Aufnahme-Verbindung
- 40: Kulissenführung
- 41: Mensch
- 42: Informationsaufnahme
- 43: Informationsverarbeitung
- 44: Informationsumsetzung
- 45: visuelle Wahrnehmung / Optik
- 46: Haptik
- 47: Hände
- 48: Bedieninformation
- 49: Steuersignal / Antriebs- / Motorsteuersignal
- 50: Antriebskraft / Antriebsmoment
- 51: (Ist-) Bewegung des Fahrzeugs / (Ist-) Position des Fahrzeugs
- 52: Sollbewegung des Fahrzeugs / Sollposition des Fahrzeugs
- 53: Rückmeldung der Bewegung / Position des Fahrzeugs
- 54: Rückmeldung der Bewegungsmöglichkeit des Fahrzeugs
- 55: Übertragung von Informationen über Antriebsreaktionen / Antriebsmoment / Antriebsgeschwindigkeit / Motorstrom
- 56: Rückmeldung der Bewegungsreaktion des Fahrzeugs
- 57: Übertragung von Informationen über Umgebungsbedingungen / Bewegungsfreiraum / Abstandssignal
- 58: Rückmeldung Bewegungsraum des Fahrzeugs
- 59: Aktives Steuerelement
- 60: Stellteil
- 61: Lager
- 62: Vorspanneinrichtung / Stellelement
- 63: Elastischer Kraftgeber / Feder
- 64: Anlagefläche
- 65: Rückhaltelement / Begrenzungselement
- 66: Kraftüberhöhung
- 67: Erfassungseinrichtung für Umgebungsbedingungen / Abstandssensor
- 68: Rangiervorrichtung
- 69: Messeinrichtung
- 70: Rangiersystem
- 71: Druckpunkt / sprungartiger Kraftanstieg
- 72: Kraftverlauf
- 73: Kraftverlauf
- 74: Kraftverlauf
- 75: Kraftverlauf
- 76: Rastpunkt
- 77: Hebe-/ Senkvorrichtung
- 78: Angriffspunkt
- 79: Deichsel
- 80: Kupplungsteil / Kupplungspfanne

- T: Aufgabe (task)
- R: Ergebnis (result)
- F,F': Rückstellkraft
- F_1': erste Rückstellkraft
- F_2': zweite Rückstellkraft
- ∑F, ∑F': Summe der Rückstellkräfte
- x, x': Auslenkung
- µ, µ': Auslenkung
- d: Abstand
- d_0: Abstand / Messbereich eines Abstandssensors
- d_min: Mindestabstand

## Patentansprüche

1. Rangiersystem (70) umfassend eine Rangiervorrichtung (68) für einen Anhänger (1) und eine Fernbedienung (10) zur Steuerung des Anhängers (1) mittels der Rangiervorrichtung (68), wobei die Rangiervorrichtung (68) mindestens einen zeitweise an beiden Seiten des Anhängers (1) Räder (2) antreibenden Hilfsfahrantrieb aufweist, und wobei die Rangiervorrichtung (68) technische Mittel aufweist, um eine Veränderung der Orientierung (22) des Fahrzeugs (1) festzustellen, **dadurch gekennzeichnet, dass** die Fernbedienung (10) ein Eingabegerät (14) mit einem Griffteil (15) aufweist und eine Rotation (17) des Griffteils um seine Hochachse vorsieht, und wobei mit der Rotation (17) des Griffteils (15) um die Hochachse ein Rotationsanteil der Fahrbewegung des Anhängers (1) beeinflussbar ist, wobei durch die Auslenkung des Griffteils (15) Steuersignale erfasst werden und die Orientierung (20) des Griffteils (15) eine gewünschte Soll-Orientierung des Fahrzeugs (1) angibt, und wobei sich während einer Kurvenfahrt des Anhängers (1) dessen Orientierung (22) kontinuierlich ändert, und zwar so lange, bis die Soll-Orientierung erreicht ist.

2. Rangiersystem nach Anspruch 1, wobei eine Regelung für die Bewegung des Anhängers (1) vorgesehen ist.

3. Rangiersystem nach einem der vorhergehenden Ansprüche, wobei eine Geschwindigkeitsregelung vorgesehen ist, sodass durch eine bestimmte Auslenkung des Griffteils eine bestimmte Soll-Geschwindigkeit für den Anhänger (1) vorgegeben wird.

4. Rangiersystem nach einem der vorhergehenden Ansprüche, wobei die Steuersignale an die Rangiervorrichtung (68) übertragen und dort in eine angetriebene Bewegung der Räder (2) und eine kongruente Bewegung des Anhängers (1) umgesetzt werden. 57

5. Rangiersystem nach einem der vorhergehenden Ansprüche, wobei die Fernbedienung (10) und die Rangiervorrichtung (68) jeweils Mittel zur Feststellung der zueinander relativen oder absoluten räumlichen Orientierungen (21, 22) von einem Basisteil (16) an der Fernbedienung (10) und dem Anhänger (1) aufweisen.

6. Rangiersystem nach einem der vorhergehenden Ansprüche, wobei die Sensitivität, mit der der Anhänger (1) auf eine Auslenkung (x, µ) an dem Eingabegerät (14) der Fernbedienung (10) reagiert, einstellbar und veränderlich ist.

7. Rangiersystem nach einem der vorhergehenden Ansprüche, wobei ein technisches Mittel zur Feststellung der Orientierungsveränderung ein mechanischer oder elektronischer Kompass ist oder dass eine Abstimmung der Orientierungen (21, 22) über optische, akustische oder elektromagnetische Peil- oder Positioniersignale erfolgt.

8. Rangiersystem nach einem der vorhergehenden Ansprüche, wobei das Eingabegerät (14) ein mindestens zweidimensional bewegliches Griffteil (15) aufweist.

9. Rangiersystem nach einem der vorhergehenden Ansprüche, wobei das Eingabegerät (14) eine Rotation (17) des Griffteils (15) um seine Hochachse in Bezug auf eine Grundposition (23) vorsieht, gegenüber der das Griffteil (15) auslenkbar ist.

10. Rangiersystem nach einem der vorhergehenden Ansprüche, wobei die Rotation (17) und/oder eine Translation (18) / Kippung des Griffteils (15) nach Richtung und ggf. Betrag einstellbar sind, wobei mit der Translation (18) / Kippung des Griffteils (15) ein Translationsanteil der Fahrbewegung des Anhängers (1) beeinflussbar ist.

11. Rangiersystem nach Anspruch 9, wobei die Grundposition (23) des Griffteils (15) drehbar veränderlich ist. 58

12. Rangiersystem nach Anspruch 11, wobei bei einer Veränderung der Orientierung (22) des Anhängers (1) die Grundposition (23) des Griffteils (15) nachführbar ist.

13. Rangiersystem nach einem der vorhergehenden Ansprüche, wobei die Fernbedienung (10) eine Positioniersteuerung für Anhängerteile, insbesondere für eine Kupplungspfanne, aufweist.

14. Rangiersystem nach einem der vorhergehenden Ansprüche, wobei das Rangiersystem eine Messeinrichtung (69) für Antriebsreaktionen des mindestens einen Hilfsfahrantriebs (3) aufweist.

15. Rangiersystem nach Anspruch 6, wobei eine Einstellung und/oder Veränderung der Sensitivität in Abhängigkeit von einer Fahr- und/oder Bedien- und/oder Umgebungssituation erfolgt, insbesondere in Abhängigkeit von Informationen (57) über erfasste Umgebungsbedingungen und/oder in Abhängigkeit von Informationen (55) über Antriebsreaktionen am Anhänger (1).

## Claims

1. Manoeuvring system (70) comprising a manoeuvring device (68) for a trailer (1), and a remote control (10) for controlling the trailer (1) by means of the manoeuvring device (68), wherein the manoeuvring device (68) has at least one auxiliary traction drive temporarily driving wheels (2) on both sides of the trailer (1), and wherein the manoeuvring device (68) has technical means in order to determine a change in the orientation (22) of the vehicle (1), **characterized in that** the remote control (10) has an input device (14) with a handle part (15) and provides for a rotation (17) of the handle part about its vertical axis, and wherein, with the rotation (17) of the handle part (15) about the vertical axis, a rotational component of the traction movement of the trailer (1) can be influenced, wherein control signals are detected by deflecting the handle part (15), and the orientation (20) of the handle part (15) specifies a desired target orientation of the vehicle (1), and wherein, during cornering of the trailer (1), the orientation (22) thereof continuously changes, to be precise for such time until the target orientation is achieved.

2. Manoeuvring system according to Claim 1, wherein closed-loop control for the movement of the trailer (1) is provided.

3. Manoeuvring system according to either of the preceding claims, wherein closed-loop speed control is provided, with the result that a specific deflection of the handle part predefines a specific target speed for the trailer (1).

4. Manoeuvring system according to one of the preceding claims, wherein the control signals are transmitted to the manoeuvring device (68) and converted there into a driven movement of the wheels (2) and a congruent movement of the trailer (1).

5. Manoeuvring system according to one of the preceding claims, wherein the remote control (10) and the manoeuvring device (68) each have means for determining the mutually relative or absolute spatial orientations (21, 22) of a base part (16) on the remote control (10) and the trailer (1).

6. Manoeuvring system according to one of the preceding claims, wherein the sensitivity with which the trailer (1) reacts to a deflection (x, µ) on the input device (14) of the remote control (10) is settable and variable.

7. Manoeuvring system according to one of the preceding claims, wherein a technical means for determining the change in orientation is a mechanical or electronic compass or that a coordination of the orientations (21, 22) occurs by way of optical, acoustic or electromagnetic homing or position signals.

8. Manoeuvring system according to one of the preceding claims, wherein the input device (14) has an at least two-dimensionally movable handle part (15).

9. Manoeuvring system according to one of the preceding claims, wherein the input device (14) provides for a rotation (17) of the handle part (15) about its vertical axis with respect to a basic position (23) with respect to which the handle part (15) can be deflected.

10. Manoeuvring system according to one of the preceding claims, wherein the rotation (17) and/or a translation (18)/tilting movement of the handle part (15) can be adjusted in terms of direction and, where appropriate, magnitude, wherein, with the translation (18)/tilting movement of the handle part (15), a translational component of the traction movement of the trailer (1) can be influenced.

11. Manoeuvring system according to Claim 9, wherein the basic position (23) of the handle part (15) is rotatably variable.

12. Manoeuvring system according to Claim 11, wherein, with a change in the orientation (22) of the trailer (1), the basic position (23) of the handle part (15) can be tracked thereto.

13. Manoeuvring system according to one of the preceding claims, wherein the remote control (10) has a positioning controller for trailer parts, in particular for a coupling socket.

14. Manoeuvring system according to one of the preceding claims, wherein the manoeuvring system has a measuring unit (69) for drive reactions of the at least one auxiliary traction drive (3).

15. Manoeuvring system according to Claim 6, wherein the sensitivity is set and/or varied in dependence on a driving and/or operating and/or environmental situation, in particular in dependence on information (57) about detected environmental conditions and/or in dependence on information (55) about drive reactions on the trailer (1).

## Revendications

1. Système de manœuvre (70), comprenant un dispositif de manœuvre (68) pour une remorque (1) et une télécommande (10) pour commander la remorque (1) au moyen du dispositif de manœuvre (68), le dispositif de manœuvre (68) présentant au moins un dispositif de propulsion auxiliaire entraînant temporairement des roues (2) sur les deux côtés de la remorque (1), et le dispositif de manœuvre (68) présentant des moyens techniques pour déterminer un changement de l'orientation (22) du véhicule (1), **caractérisé en ce que** la télécommande (10) présente un appareil d'entrée (14) muni d'une partie de manette (15) et prévoit une rotation (17) de la partie de manette autour de son axe vertical, et dans lequel la rotation (17) de la partie de manette (15) autour de l'axe vertical permet d'influencer une part de rotation du mouvement de déplacement de la remorque (1), dans lequel l'excursion de la partie de manette (15) permet de détecter des signaux de commande et l'orientation (20) de la partie de manette (15) indique une orientation nominale souhaitée du véhicule (1), et dans lequel l'orientation (22) de la remorque change en continu pendant un déplacement en virage de la remorque (1) et notamment jusqu'à ce que l'orientation nominale soit atteinte.

2. Système de manœuvre selon la revendication 1, dans lequel une régulation est prévue pour le mouvement de la remorque (1).

3. Système de manœuvre selon l'une quelconque des revendications précédentes, dans lequel une régulation de vitesse est prévue de sorte qu'une certaine excursion de la partie de manette permet de spécifier une certaine vitesse nominale pour la remorque (1).

4. Système de manœuvre selon l'une quelconque des revendications précédentes, dans lequel les signaux de commande sont transmis au dispositif de manœuvre (68) et y sont transformés en un mouvement entraîné des roues (2) et un mouvement congruent de la remorque (1).

5. Système de manœuvre selon l'une quelconque des revendications précédentes, dans lequel la télécommande (10) et le dispositif de manœuvre (68) présentent respectivement des moyens pour déterminer les orientations spatiales (21, 22) absolues ou relatives les unes aux autres à partir d'une partie de base (16) sur la télécommande (10) et la remorque (1).

6. Système de manœuvre selon l'une quelconque des revendications précédentes, dans lequel la sensibilité avec laquelle la remorque (1) répond à une excursion (x, µ) sur l'appareil d'entrée (14) de la télécommande (10) est réglable et variable.

7. Système de manœuvre selon l'une quelconque des revendications précédentes, dans lequel un moyen technique pour déterminer le changement d'orientation est une boussole mécanique ou électronique, ou qu'une adaptation des orientations (21, 22) est effectuée par des signaux de repérage ou de positionnement optiques, acoustiques ou électromagnétiques.

8. Système de manœuvre selon l'une quelconque des revendications précédentes, dans lequel l'appareil d'entrée (14) présente une partie de manette (15) mobile dans au moins deux dimensions.

9. Système de manœuvre selon l'une quelconque des revendications précédentes, dans lequel l'appareil d'entrée (14) prévoit une rotation (17) de la partie de manette (15) sur son axe vertical par rapport à une position de base (23) par rapport à laquelle la partie de manette (15) peut être déviée.

10. Système de manœuvre selon l'une quelconque des revendications précédentes, dans lequel la rotation (17) et/ou une translation (18)/ un basculement de la partie de manette (15) sont réglables selon la direction et le cas échéant la grandeur, la translation (18)/ le basculement de la partie de manette (15) permettant d'influencer une part de translation du mouvement de déplacement de la remorque (1).

11. Système de manœuvre selon la revendication 9, dans lequel la position de base (23) de la partie de manette (15) est variable en rotation.

12. Système de manœuvre selon la revendication 11, dans lequel, en cas de changement de l'orientation (22) de la remorque (1), la position de base (23) de la partie de manette (15) peut être asservie.

13. Système de manœuvre selon l'une quelconque des revendications précédentes, dans lequel la télécommande (10) présente une commande de positionnement pour des parties de remorque, en particulier pour une cavité d'attelage.

14. Système de manœuvre selon l'une quelconque des revendications précédentes, dans lequel le système de manœuvre présente un dispositif de mesure (69) pour des réactions d'entraînement du au moins un dispositif de propulsion auxiliaire (3).

15. Système de manœuvre selon la revendication 6, dans lequel un réglage et/ou un changement de la sensibilité est effectué en fonction de la situation de conduite et/ou d'utilisation et/ou de l'environnement, en particulier en fonction d'informations (57) concernant des conditions d'environnement détectées et/ou en fonction d'informations (55) concernant des réactions d'entraînement au niveau de la remorque (1).
